(19) **Europäisches Patentamt / European Patent Office / Office européen des brevets**

(11) **EP 4 660 243 A1**

(12) # EUROPEAN PATENT APPLICATION
published in accordance with Art. 153(4) EPC

(43) Date of publication:
**10.12.2025 Bulletin 2025/50**

(21) Application number: **24750372.5**

(22) Date of filing: **31.01.2024**

(51) International Patent Classification (IPC):
*C08L 63/00* (2006.01)    *C08G 59/50* (2006.01)
*C08G 73/02* (2006.01)    *C08K 3/013* (2018.01)
*C08K 5/17* (2006.01)     *C08K 5/103* (2006.01)
*C09K 5/14* (2006.01)     *H01M 10/653* (2014.01)

(52) Cooperative Patent Classification (CPC):
**C08G 59/20; C08G 59/40; C08G 59/50;
C08G 73/02; C08K 3/013; C08K 3/20; C08K 3/22;
C08K 5/103; C08K 5/17; C08L 63/00; C09J 9/00;
C09J 11/04; C09J 11/06; C09J 163/00;
C09J 201/00;**                          (Cont.)

(86) International application number:
**PCT/JP2024/003193**

(87) International publication number:
**WO 2024/162423 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023   JP 2023013584
31.01.2023   JP 2023013583
08.03.2023   JP 2023035923
31.03.2023   JP 2023059573
31.03.2023   JP 2023059531**

(71) Applicant: **Sekisui Chemical Co., Ltd.
Osaka-shi, Osaka 530-8565 (JP)**

(72) Inventors:
• **FURUKAWA, Atsushi**
  **Mishima-gun, Osaka 618-0021 (JP)**
• **IWAMOTO, Tatsuya**
  **Mishima-gun, Osaka 618-0021 (JP)**
• **KOBAYASHI, Yusuke**
  **Mishima-gun, Osaka 618-0021 (JP)**
• **YOSHIOKA, Tetsuro**
  **Mishima-gun, Osaka 618-0021 (JP)**

(74) Representative: **Ter Meer Steinmeister & Partner
Patentanwälte mbB
Nymphenburger Straße 4
80335 München (DE)**

(54) **CURABLE COMPOSITION AND THERMALLY CONDUCTIVE MEMBER**

(57)    A curable composition comprising an epoxy resin, a thermally conductive filler, an amine compound (X) having two or more amino groups, and a polyfunctional acrylate compound, the amine compound (X) having a viscosity of 20 Pa·s or less measured at 25°C and 10 rpm using an E-type viscometer or having an oxyalkylene structure, a content of the amine compound (X) with respect to a total amount of resin components being 15 mass% or more and 55 mass% or less.

EP 4 660 243 A1

(52) Cooperative Patent Classification (CPC): (Cont.)
**C09K 5/14; H01M 10/613; H01M 10/625;
H01M 10/653; H01M 10/6554;** Y02E 60/10

## Description

Technical Field

The present invention relates to a curable composition and a thermally conductive member used in electronic device applications such as battery assemblies.

Background Art

Thermally conductive compositions are used, for example, in order to fill a gap between a heating element and a heat dissipating element, transmit heat generated in the heating element, and dissipate it from the heat dissipating element. Thermally conductive compositions are generally formed of curable compositions having curability, and are often used as cured products after filling and being cured. The curable composition has an important role in many electronic device applications, for example, battery assemblies such as lithium-ion battery (LiB) assemblies for electric vehicles (EVs), power electronics, electronic packaging, LEDs, solar cells, and electrical grids.

For example, PTL 1 discloses a curable composition that contains an epoxy resin, a polyamide composition containing a polyamide having a tertiary amide in the main chain and being amine-terminated, an amino-functional compound containing 2 to 20 carbon atoms, a polyfunctional (meth)acrylate, and an inorganic filler, and that can be suitably used in electronic device applications such as battery assemblies.

Citation List

Patent Literature

PTL 1: Japanese Patent Application Publication No. 2021-512990

Summary of Invention

Technical Problem

Incidentally, as the number of EVs produced continues to increase in the future, there will be a demand for improving the productivity. For example, the curable composition is required to have an appropriately low compressive load in order to shorten the time required for battery assembling, and is also required to maintain a low compressive load for a long period of time to extend the pot life. In addition, when the curable composition is discharged using a dispenser or the like, it is also required to reduce the viscosity in consideration of workability. In addition, it is required to have fast curability at room temperature after assembling, and specifically, it is required to have fast curability which allows curing to be performed in a short time so that an adhesive force sufficient for temporary adhesion is provided.

The curable composition disclosed in PTL 1 has sufficient green strength after curing at room temperature for about 10 minutes or shorter, and is considered to have sufficient fast curability. However, since the curable composition of PTL 1 contains a large amount of a polyamide, but a small amount of an amine compound, the viscosity before curing increases due to the polyamide interaction, and it is difficult to extend the pot life.

Thus, an object of the present invention is to provide a curable composition which has a low viscosity and fast curability and allows a pot life to be extended.

Solution to Problem

The inventors conducted extensive studies and as a result, found that, in a curable composition containing an epoxy resin, a thermally conductive filler, an amine compound (X) having two or more amino groups, and a polyfunctional acrylate compound, when a specific amount of the specific amine compound (X) is used, or a specific amount of water is added to the curable composition, the above object can be achieved, and they completed the present invention shown below. Specifically, the present invention provides the following [1] to [18].

[1] A curable composition including an epoxy resin, a thermally conductive filler, an amine compound (X) having two or more amino groups, and a polyfunctional acrylate compound,

the amine compound (X) having a viscosity of 20 Pa·s or less measured at 25°C and 10 rpm using an E-type viscometer or having an oxyalkylene structure,
a content of the amine compound (X) with respect to a total amount of resin components being 15 mass% or more and 55 mass% or less.

[2] The curable composition according to [1], wherein a content of the polyfunctional acrylate compound with respect to a total amount of resin components is 20 mass% or less.

[3] The curable composition according to [1] or [2], wherein the number of functional groups of the polyfunctional acrylate compound is 3 or more.

[4] The curable composition according to any one of [1] to [3], wherein the number of functional groups of the polyfunctional acrylate compound is 6 or more.

[5] The curable composition according to any one of [1] to [4], having a viscosity measured at 25°C using a rheometer is 300 Pa·s or less.

[6] The curable composition according to any one of [1] to [5], wherein the epoxy resin includes a monofunctional epoxy resin.

[7] The curable composition according to any one of [1] to [6], wherein the amine compound (X) has an oxypropylene structure.

[8] The curable composition according to any one of [1] to [7], including 0.3 mass% or more and 2 mass% or less of water with respect to a total amount of the curable composition.

[9] The curable composition according to any one of [1] to [8], wherein the amine compound (X) includes an amine compound having three or more amino groups.

[10] The curable composition according to any one of [1] to [9], including a first agent which contains the epoxy resin and the polyfunctional acrylate compound and with which a first container is filled, and a second agent which contains the amine compound (X) and with which a second container is filled.

[11] The curable composition according to [10], wherein a difference between a viscosity (Pa·s) of the first agent and a viscosity (Pa·s) of the second agent measured at 25°C using a rheometer is 150 Pa·s or less.

[12] The curable composition according to [10] or [11], wherein a ratio of a functional group concentration (mol/g) of the second agent to a functional group concentration (mol/g) of the first agent is 1.3 or more and 2.6 or less.

[13] A curable composition comprising an epoxy resin, a thermally conductive filler, an amine compound (X) having two or more amino groups, a polyfunctional acrylate compound, and water,
a content of the water with respect to a total amount of the curable composition being 0.3 mass% or more and 2.0 mass% or less.

[14] A container set, which is filled with the curable composition according to any one of [10] to [12], includes a first container filled with the first agent and a second container filled with the second agent.

[15] A curable composition including an epoxy resin, a thermally conductive filler, an amine compound (X) having two or more amino groups, and a polyfunctional acrylate compound,

the amine compound (X) having a viscosity of 20 Pa·s or less measured at 25°C and 10 rpm using an E-type viscometer or having an oxyalkylene structure,
a content of the amine compound (X) with respect to a total amount of resin components is 15 mass% or more and 70 mass% or less,
the amine compound (X) including an amine compound having two amino groups.

[16] A thermally conductive member formed of a cured product of the curable composition according to any one of [1] to [13] and [15].

[17] A battery assembly including the thermally conductive member according to [16].

[18] Use of the curable composition according to any one of [1] to [13] and [15] as at least one of a gap filler between battery cells, a gap filler between a battery cell and a module housing, a gap filler between a battery module and a battery pack housing, or a gap filler between a battery cell and a battery pack housing.

Advantageous Effects of Invention

According to the present invention, it is possible to provide a curable composition which has a low viscosity and fast curability and allows a pot life to be extended.

Brief Description of Drawings

[Fig. 1]

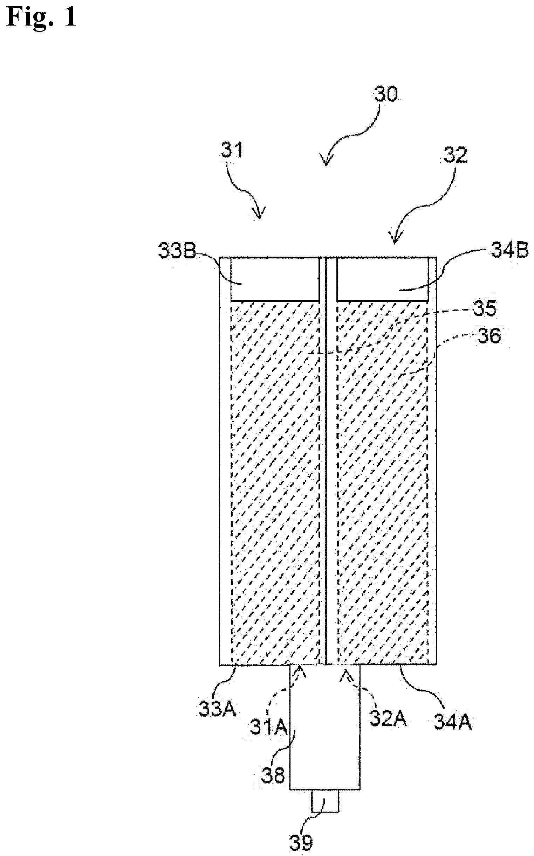

Fig. 1 is a schematic view showing a container set according to one embodiment.

[Fig. 2]

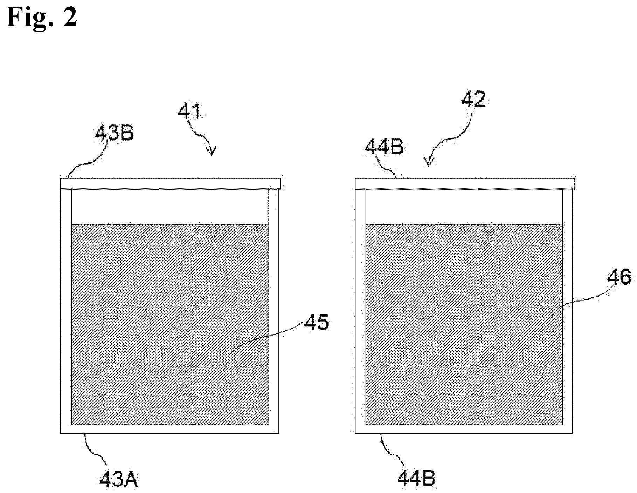

Fig. 2 is a schematic view showing a container set according to one embodiment.
[Fig. 3]

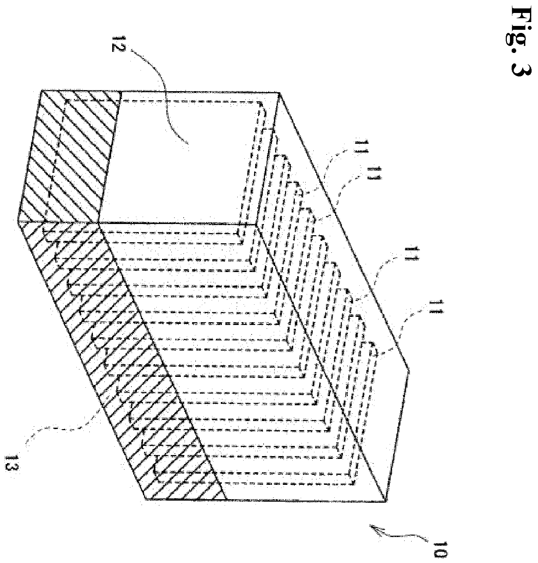

Fig. 3 is a perspective view showing a typical configuration of a battery module according to the present invention.
[Fig. 4]

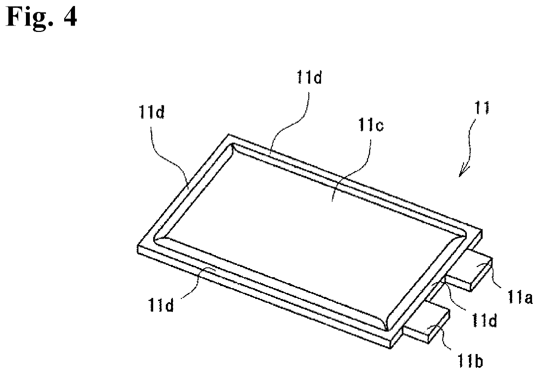

Fig. 4 is a perspective view showing a typical configuration of a battery cell of the battery module.
[Fig. 5]

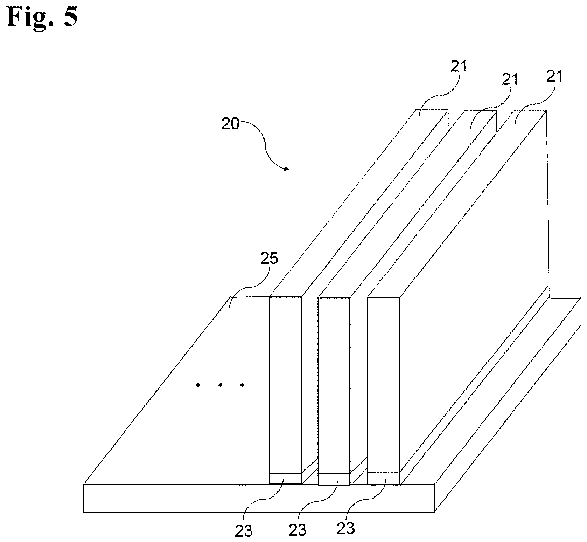

Fig. 5 is a perspective view showing a battery assembly having a cell-to-pack structure. Description of Embodiments

Hereinafter, curable compositions according to embodiments of the present invention will be described in detail.

<<First Embodiment>>

A curable composition according to a first embodiment of the present invention contains an epoxy resin, a thermally conductive filler, an amine compound (X) having two or more amino groups, and a polyfunctional acrylate compound.

[Epoxy Resin]

The curable composition according to the present embodiment contains an epoxy resin. Due to the curable composition containing an epoxy resin, the adhesive force of the curable composition can be easily adjusted to be within an appropriate range. The epoxy resin is a compound having one or more epoxy groups. The epoxy resin may be a polyfunctional epoxy resin having two or more epoxy groups or may be a monofunctional epoxy resin having one epoxy group.

The curable composition according to the present embodiment preferably contains at least a polyfunctional epoxy resin. Due to the curable composition containing the polyfunctional epoxy resin, crosslinks can be appropriately formed, and the adhesive strength can be easily increased.

More preferably, the curable composition further contains a monofunctional epoxy resin in addition to the polyfunctional epoxy resin. When the curable composition further contains a monofunctional epoxy resin, the crosslink density after curing is prevented from becoming too high and it is easier to increase the elongation. In addition, when the monofunctional epoxy resin is used, the viscosity of the curable composition before curing is easily reduced.

When the polyfunctional epoxy resin and the monofunctional epoxy resin are used in combination, the mass ratio (monofunctional/polyfunctional) of the monofunctional epoxy resin to the polyfunctional epoxy resin is preferably 10/90 or more and 90/10 or less, more preferably 15/85 or more and 75/25 or less, still more preferably 20/80 or more and 70/30 or less, and yet more preferably 25/75 or more and 55/45 or less.

Examples of polyfunctional epoxy resins include bifunctional or trifunctional epoxy resins, and a bifunctional epoxy resin is preferably used. Specific examples of polyfunctional epoxy resins include, but are not limited to, epoxy resins having an aromatic ring such as a phenol novolac type epoxy resin, a resorcinol type epoxy resin, an epoxy resin having a bisphenol skeleton, an epoxy resin having a naphthalene skeleton, an epoxy resin having a fluorene skeleton, an epoxy resin having a biphenyl skeleton, an epoxy resin having a bi(glycidyloxyphenyl)methane skeleton, an epoxy resin having a xanthene skeleton, an epoxy resin having an anthracene skeleton, and an epoxy resin having a pyrene skeleton.

In addition, examples thereof include epoxy resins having an alicyclic skeleton such as an epoxy resin having a dicyclopentadiene skeleton and an epoxy resin having an adamantane skeleton.

In addition, examples thereof include aliphatic epoxy resins such as butanediol diglycidyl ether, neopentyl glycol diglycidyl ether, glycerol polyglycidyl ether, and trimethylolpropane polyglycidyl ether.

In addition, a hydrogenated product or modified product of the epoxy resins exemplified above can also be used as the epoxy resin.

Examples of epoxy resins having a bisphenol skeleton described above include epoxy resins having a bisphenol A typed, bisphenol F typed or bisphenol S typed bisphenol skeleton.

Examples of resorcinol type epoxy resins described above include resorcinol diglycidyl ether.

Examples of epoxy resins having a naphthalene skeleton described above include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of epoxy resins having a fluorene skeleton described above include 9,9-bis(4-glycidyloxyphenyl) fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl) fluorene, 9,9-bis(4-glycidyloxy-3,5-dimethylphenyl)fluorene, 9,9-bis(4-glycidyloxy-3,5-dichlorophenyl)fluorene, and 9,9-bis(4-glycidyloxy-3,5-dibromophenyl)fluorene.

Examples of epoxy resins having a biphenyl skeleton described above include 4,4'-diglycidylbiphenyl, and 4,4'-diglycidyl-3,3',5,5'-tetramethylbiphenyl. Examples of epoxy resins having a bi(glycidyloxyphenyl)methane skeleton described above include 1,1'-bi(2,7-glycidyloxynaphthyl)methane, 1,8'-bi(2,7-glycidyloxynaphthyl)methane, 1,1'-bi(3,7-glycidyloxynaphthyl)methane, 1,8'-bi(3,7-glycidyloxynaphthyl)methane, 1,1'-bi(3,5-glycidyloxynaphthyl) methane, 1,8'-bi(3,5-glycidyloxynaphthyl)methane, 1,2'-bi(2,7-glycidyloxynaphthyl)methane, 1,2'-bi(3,7-glycidyloxynaphthyl)methane, and 1,2'-bi(3,5-glycidyloxynaphthyl)methane.

Examples of epoxy resins having a xanthene skeleton described above include 1,3,4,5,6,8-hexamethyl-2,7-bis-glycidylmethoxy-9-phenyl-9H-xanthene. Examples of epoxy resins having an anthracene skeleton described above include those having one or more anthracene skeletons and two or more epoxy groups or glycidyl groups in one molecule.

Examples of epoxy resins having a pyrene skeleton described above include those having one or more pyrene skeletons and two or more epoxy groups or glycidyl groups in one molecule.

Examples of epoxy resins having a dicyclopentadiene skeleton described above include dicyclopentadiene dioxide and phenol novolac epoxy resins having dicyclopentadiene skeleton. Examples of epoxy resins having an adamantane skeleton described above include 1,3-bis(4-glycidyloxyphenyl)adamantane and 2,2-bis(4-glycidyloxyphenyl)adamantane.

As the polyfunctional epoxy resin, among the above examples, in order to enhance adhesive strength and mechanical strength, an epoxy resin having an aromatic ring is preferable, and particularly an epoxy resin having a phenyl group is more preferable, and particularly a bisphenol type epoxy resin, which is an epoxy resin having a bisphenol skeleton, is still more preferable.

The polyfunctional epoxy resins may be used alone or two or more thereof may be used in combination.

Examples of monofunctional epoxy resins include monofunctional epoxy resins having an aromatic ring such as phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene. The monofunctional epoxy resin having an aromatic ring is more preferably an epoxy resin having a phenyl group.

In addition, as the monofunctional epoxy resin, in consideration of high safety of raw materials, an aliphatic monofunctional epoxy resin is also preferable, and specific examples thereof include glycidyl ethers of aliphatic alcohol. Here, the aliphatic alcohol may have a branched structure or a linear structure, but the linear structure is preferable in order to enhance elongation. In addition, the aliphatic alcohol may have, for example, about 4 to 24 carbon atoms, and preferably has 10 to 20 carbon atoms in order to enhance elongation. In addition, the aliphatic alcohol is preferably a saturated aliphatic alcohol in order to enhance elongation. Specific examples of glycidyl ethers of aliphatic alcohol include butyl glycidyl ether, decyl glycidyl ether, lauryl glycidyl ether, myristyl glycidyl ether, cetyl glycidyl ether, and stearyl glycidyl ether. The monofunctional epoxy resin may be other than those exemplified above, and examples thereof include monofunctional epoxy resins having a glycidyl group but having no ether group such as 1,2-epoxybutane and a propylene oxide.

As the monofunctional epoxy resin, in order to enhance elongation, an aliphatic monofunctional epoxy resin is preferably used, and particularly a glycidyl ether of aliphatic alcohol is preferably used.

The monofunctional epoxy resins may be used alone or two or more thereof may be used in combination.

The epoxy resin preferably contains an epoxy resin having an aromatic ring, particularly a phenyl group. The epoxy resin having an aromatic ring such as a phenyl group may be a monofunctional epoxy resin or a polyfunctional epoxy resin. The aromatic ring, particularly the phenyl group forms a stacking structure due to $\pi$-$\pi$ interactions after curing, and the epoxy resin is likely to form a pseudo-crosslinked structure in the cured product. Therefore, the mechanical strength tends to be high, and the adhesive force tends to be also high. Preferably, the epoxy resin includes a polyfunctional epoxy resin, and the polyfunctional epoxy resin has an aromatic ring, particularly a phenyl group.

The epoxy resin to be used may have, for example, a molecular weight of 2,000 or less, preferably 1,000 or less, and more preferably 500 or less. When an epoxy resin having a molecular weight of a certain value or less is used, the viscosity of the curable composition can be reduced, and excellent filling with the thermally conductive filler can be achieved. The molecular weight of the epoxy resin is, for example, 100 or more, preferably 150 or more, more preferably 200 or more, and still more preferably 250 or more. When the epoxy resin has a molecular weight of a certain value or more, the crosslink density can be prevented from becoming higher than necessary, and it is easier to enhance elongation. Here, the epoxy resin may be a liquid at room temperature (25°C).

The epoxy equivalent of the epoxy resin is preferably 1,000 g/eq or less, more preferably 500 g/eq or less, and still more preferably 375 g/eq or less, and preferably 100 g/eq or more, more preferably 125 g/eq or more, and still more preferably 140 g/eq or more.

The epoxy resin may be a liquid at room temperature (25°C). In addition, in consideration of low viscosity, the lower the viscosity of the epoxy resin at 25°C, the better, and the viscosity may be, for example, 50 Pa·s or less and is preferably 10 Pa·s or less. In addition, the viscosity of the epoxy resin at 25°C is not particularly limited, and may be, for example, 0.5 mPa·s or more or 1 mPa·s or more.

In addition, the viscosity of the polyfunctional epoxy resin at 25°C may be, for example, 50 Pa·s or less and is preferably 10 Pa·s or less, and may be 1 mPa·s or more, and is practically preferably 10 mPa·s or more, and more preferably 100 mPa·s or more.

On the other hand, the viscosity of the monofunctional epoxy resin at 25°C may be, for example, 10 Pa·s or less, is preferably 1 Pa·s or less, and more preferably 100 mPa·s or less, and may be, for example, 0.5 mPa·s or more, 1 mPa·s or more, or 3 mPa·s or more. Here, when the epoxy resin contains both a polyfunctional epoxy resin and a monofunctional epoxy resin, the viscosity of the monofunctional epoxy resin is preferably lower than the viscosity of the polyfunctional epoxy resin.

Here, the viscosities of the epoxy resin and the amine compound to be described below are viscosities measured using an E-type viscometer under conditions at 10 rpm and 25°C.

The content of the epoxy resin with respect to the total amount of resin components in the curable composition is, for example, 15 mass% or more and 80 mass% or less. When the content of the epoxy resin is 15 mass% or more, it is easier to increase the adhesive strength and elongation when fully cured. In addition, when the content is 80 mass% or less, uncured epoxy resin components are unlikely to remain, and it is possible to prevent the uncured component from inhibiting adhesion or elongation from being reduced.

The content of the epoxy resin is preferably 20 mass% or more and 70 mass% or less, more preferably 25 mass% or more and 60 mass% or less, and still more preferably 30 mass% or more and 53 mass% or less.

Here, in this specification, the total amount of resin components is a total amount of a curing agent to be described below and a base resin that can be cured with the curing agent, and more specifically, a total amount of an amine compound (X) to be described below, a curing agent other than the amine compound (X), an epoxy resin, a polyfunctional acrylate compound, and a base resin that can be cured with a curing agent other than the epoxy resin and the polyfunctional acrylate compound.

[Amine Compound (X)]

The amine compound (X) is a compound having two or more amino groups. In addition, in the present embodiment, the amine compound (X) has a viscosity of 20 Pa·s or less at 25°C and 10 rpm measured with an E-type viscometer or has an oxyalkylene structure. In the present embodiment, due to using the above specific amine compound (hereinafter also referred to as an amine compound (X1)), initial curing proceeds immediately and thus fast curability is achieved, but the compressive load in the initial stage of curing is appropriately low, the compressive load can be maintained at a low level for a relatively long period of time, and thus the pot life can be extended. The principle behind this is not clear, but is speculated as follows. That is, in the initial stage of curing, the amine compound (X) and the polyfunctional acrylate compound are cured preferentially and thereby fast curability is exhibited, but the reaction between the amine compound (X) and the epoxy resin is inhibited and thus the compressive load remains low in the initial stage of curing. Particularly, it is speculated that, in the present embodiment, due to using an amine compound (X) having a viscosity of 20 Pa·s or less, the initial viscosity of the composition is reduced and consequently the compressive load in the initial stage of curing is also reduced; therefore, the compressive load is maintained at a low level for a relatively long period of time, and the pot life is also extended. In addition, it is speculated that, due to using an amine compound (X) having an oxyalkylene structure, the compressive load after the reaction of the amine compound (X) is appropriately reduced due to its chemical structure, and accordingly, the pot life is extended. Here, since the oxyalkylene structure has an effect of reducing the compressive load derived from the chemical structure, it is thought that the usable time is extended even when the viscosity is more than 20 Pa·s.

With having two or more amino groups, the amine compound (X) can appropriately react with the epoxy resin to cure thereof. The number of amino groups is not particularly limited, and is, for example, 10 or less, preferably 6 or less, and more preferably 4 or less. As described above, when the number of amino groups is a certain number or less, the curing reaction is prevented from proceeding too much, and it becomes easier to extend the pot life. In addition, in consideration of fast curability, the number of amino groups is preferably 3 or more.

The amino group of the amine compound (X) may be a primary amino group or a secondary amino group, and in consideration of the reactivity and curing rate, the amine compound (X) preferably has a primary amino group. The amine compound (X) preferably has one or more primary amino groups, more preferably two or more primary amino groups, and still more preferably three or more primary amino groups in one molecule. When the amine compound (X) has many primary amino groups, fast curability can be achieved. The number of primary amino groups in one molecule in the amine compound (X) is, for example, 6 or less, preferably 5 or less, and more preferably 4 or less.

As described above, in one aspect, the viscosity of the amine compound (X) is 20 Pa·s or less. When the viscosity is more than 20 Pa·s, the viscosity before curing tends to be high and it becomes difficult to extend the pot life. In order to reduce the viscosity before curing and easily extend the pot life, the viscosity of the amine compound (X) is preferably 15 Pa·s or less, more preferably 12 Pa·s or less, still more preferably 5 Pa·s or less, and yet more preferably 2 Pa·s or less.

In addition, the viscosity of the amine compound (X) is not particularly limited, and is, for example, 0.01 Pa·s or more, preferably 0.05 Pa·s or more, more preferably 0.1 Pa·s or more, and still more preferably 0.5 Pa·s or more.

In one aspect, an amine compound (X) having an oxyalkylene structure is used. With using one having an oxyalkylene structure, due to its molecular structure, the compressive load in the initial stage of curing is appropriately reduced, it is easier to maintain the compressive load at a low level for a relatively long period of time, and it is easier to extend the pot life.

The amine compound (X) having an oxyalkylene structure may have a viscosity of 20 Pa·s or less, and a preferable viscosity values in this case are as described above. When the amine compound (X) has a viscosity of 20 Pa·s or less and an oxyalkylene structure, the compressive load is maintained at a low level for a relatively long period of time, and it is easier to further extend the pot life.

However, in the present invention, an amine compound having a viscosity of more than 20 Pa·s can also be used as an amine compound (X) having an oxyalkylene structure.

The oxyalkylene structure preferably has a structure having an oxyalkylene having about 2 to 5 carbon atoms and more preferably has an oxypropylene structure. Examples of oxyalkylene structures include a polyoxyalkylene structure having two or more consecutive oxyalkylene structures, and specific examples thereof include a polyoxyethylene structure, a polyoxypropylene structure, a polyoxybutylene structure, a polyoxytetramethylene structure, an oxyethylene-oxypropylene copolymer structure, and an oxypropylene-oxybutylene copolymer structure. Among these, the amine compound (X) preferably has a polyoxypropylene structure, an oxyethylene-oxypropylene copolymer structure, or an oxypropylene-oxybutylene copolymer structure, and particularly preferably has a polyoxypropylene structure.

The amine compound (X) having an oxyalkylene structure is generally, for example, an aliphatic amine, and specific examples thereof include polyoxyalkylene polyamines such as polyoxyethylene diamine, poly(oxyethylene/oxypropylene)diamine, poly(oxypropylene)diamine, poly(oxybutylene/oxypropylene)diamine, polyethylene glycol bis(propylamine), trimethylolpropane poly(oxypropylene)triamine, and glyceryl poly(oxypropylene)triamine. Among these, poly(oxypropylene)diamine, glyceryl poly(oxypropylene)triamine, and trimethylolpropane poly(oxypropylene)triamine are preferable, and particularly trimethylolpropane poly(oxypropylene)triamine is more preferable.

In addition, the amine compound (X) having no oxyalkylene structure may be an aliphatic amine, an aromatic ring-containing amine or an amidoamine. Specific examples of aliphatic amines include, but are not limited to, branched or linear alkanediamines such as 1,3-diaminopropane, 2-methyl-1,5-diaminopentane, trimethylhexamethylenediamine, 2-methylpentamethylenediamine, and diethyl aminopropylamine, and alicyclic polyamines such as 1,3-bis(aminomethyl)cyclohexane, 1,4-bis(aminomethyl)cyclohexane, cyclohexane diamine, methylcyclohexane diamine, and isophorone diamine.

The amidoamine may be of any type as long as it has a low viscosity.

The aromatic ring-containing amine may be an amine in which the amino group is not directly bonded to the aromatic ring, such as m-xylylenediamine, or a reaction product of m-xylylenediamine and styrene, or an aromatic amine in which the amino group is directly bonded to the aromatic ring.

As the amine compound (X) having no oxyalkylene structure, in order to appropriately increase the curing rate and to provide a certain compressive load in the initial stage of curing, an aromatic ring-containing amine in which the amino group is not directly bonded to the aromatic ring such as a reaction product of m-xylylenediamine and styrene, or an aliphatic diamine is preferable.

As the amine compound (X), among the above examples, in order to secure fast curability and a certain compressive load in the initial stage of curing, an aliphatic amine and an aromatic ring-containing amine in which the amino group is not directly bonded to the aromatic ring are preferable, and particularly polyoxyalkylene polyamines are more preferable.

The amine compounds (X) may be used alone or two or more thereof may be used in combination.

The molecular weight of the amine compound (X) is not particularly limited, and may be, for example, 5,000 or less, and is preferably 3,000 or less, more preferably 1,000 or less, and still more preferably 600 or less. When an amine compound (X) having a molecular weight of a certain value or less is used, the viscosity of the curable composition can be reduced, and excellent filling with the thermally conductive filler can be achieved.

In addition, an amine compound (X) having a molecular weight of, for example, 100 or more, preferably 110 or more, more preferably 200 or more, and still more preferably 300 or more may be used. When the amine compound (X) has a molecular weight of a certain value or more, the compressive load in the initial stage of curing can be appropriately reduced and the crosslink density can be prevented from becoming higher than necessary, and it is easier to enhance elongation and adhesive force. Here, the amine compound (X) may be a liquid at room temperature (25°C).

Here, the molecular weight of the amine compound (X) and the epoxy resin described above can be measured by, for example, a mass spectrometer (GC-MS or LC-MS).

The active hydrogen equivalent of the amine compound (X) is not particularly limited, and is, for example, 15 g/eq or more, preferably 25 g/eq or more, and more preferably 40 g/eq or more, and is, for example, 1,000 g/eq or less, preferably 600 g/eq or less, more preferably 300 g/eq or less, and still more preferably 150 g/eq or less.

At least one of the amine compound (X) or the epoxy resin preferably has a phenyl group. When at least one of the amine compound (X) or the epoxy resin has a phenyl group, a pseudo-crosslinked structure is formed, and the mechanical strength and the adhesive force of the curable composition are easily increased.

In a first aspect, the content of the amine compound (X) in the curable composition with respect to the total amount of resin components is 15 mass% or more and 55 mass% or less. When the content of the amine compound (X) is less than 15 mass%, the reaction between the polyfunctional acrylate compound and the amine compound (X) does not proceed quickly, and it is difficult to impart fast curability. This is because the amount of an amine is simply too small, and thus a sufficient amount of the amine that can be cured is not secured, and the adhesive strength cannot be exhibited.

On the other hand, when the content of the amine compound (X) is more than 55 mass%, the amine compound (X) reacts not only with the polyfunctional acrylate compound but also with the epoxy resin in relatively large amounts, the compressive load becomes relatively large in the early stage in the beginning of curing, and the pot life cannot be extended.

The content of the amine compound (X) with respect to the total amount of resin components is preferably 25 mass% or more and 52 mass% or less, more preferably 30 mass% or more and 50 mass% or less, and still more preferably 35 mass% or more and 48 mass% or less.

Here, in the first embodiment, the content of the amine compound (X) means the content of the amine compound (X1).

In the first aspect of the first embodiment, an amine compound (X) having three or more amino groups may be used. In the first aspect, the proportion of the amine compound having three or more amino groups with respect to the amine compound (X) in the entire curable composition may be 50 mass% or more, and is preferably 70 mass% or more and 100 mass% or less, and more preferably 80 mass% or more and 100 mass% or less.

In addition, in a second aspect of the first embodiment, the content of the amine compound (X) in the curable composition with respect to the total amount of resin components is 15 mass% or more and 70 mass% or less. In the second aspect, an amine compound (X) having two amino groups may be used.

In the second aspect, when the content of the amine compound (X) in the curable composition is less than 15 mass%, the reaction between the polyfunctional acrylate compound and the amine compound (X) does not proceed quickly, and it is difficult to impart fast curability. On the other hand, when the content of the amine compound (X) is more than 70 mass%, the amine compound (X) reacts not only with the polyfunctional acrylate compound but also with the epoxy resin in relatively large amounts, the compressive load becomes relatively large in the early stage in the beginning of curing, and the pot life cannot be extended.

In the second aspect, the content of the amine compound (X) with respect to the total amount of resin components is preferably 25 mass% or more and 65 mass% or less, more preferably 35 mass% or more and 64 mass% or less, and still more preferably 40 mass% or more and 63 mass% or less.

In the second aspect, the proportion of the amine compound having two amino groups with respect to the amine compound (X) in the entire curable composition may be more than 50 mass%, and is preferably 70 mass% or more and 100 mass% or less, more preferably 80 mass% or more and 100 mass% or less, and most preferably 100 mass%.

(Curing Agent Other Than Amine Compound (X1))

The curable composition of the present invention may contain a curing agent other than the amine compound (X1) as long as the effects of the present invention are not impaired. Specific examples thereof include an amine compound having a viscosity of more than 20 Pa·s, having no oxyalkylene structure, and having two or more amino groups (hereinafter referred to as an "amine compound (X2)" in some cases) and an amine compound having only one amino group.

Examples of amine compounds (X2) include amine compounds that have no oxyalkylene structure and become a solid at 25°C.

Specific examples thereof include aromatic ring-containing amines such as m-phenylenediamine, p-phenylenediamine, p-xylylenediamine, tolylene-2,4-diamine, tolylene-2,6-diamine, mesitylene-2,4-diamine, mesitylene-2,6-diamine, 3,5-diethyl tolylene-2,4-diamine, 3,5-diethyl tolylene-2,6-diamine, biphenylenediamine, 4,4-diaminodiphenylmethane, 2,5-naphthylenediamine, and 2,6-naphthylenediamine, aliphatic amines such as 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,8-octanediamine, 2-methyl-1,9-nonanediamine, and 2,7-dimethyl-1,8-octanediamine, polyamideamines, and esteramines.

Examples of polyamideamines include those obtained by reacting aliphatic dicarboxylic acids such as succinic acid, glutaric acid, adipic acid, pimelic acid, suberic acid, and azelaic acid, or carboxylic acid compounds such as fatty acids and dimer acids with aliphatic polyamines or polyamines having polyoxyalkylene chains. Examples of esteramines include 1,5-bis[1,2-bis(ethoxycarbonyl)ethyl amino]-2-methylpentane, and examples of commercial products include "Daitocurar E-6347" (commercially available from Daito Sangyo Co., Ltd.).

In addition, the curable composition may contain monoamines having only one amino group as a curing agent that can react with the epoxy resin and the polyfunctional acrylate compound to be described below as long as the effects of the present invention are not impaired. Specific examples thereof include, but are not limited to, methoxypoly (oxyethylene/oxypropylene)-2-propylamine, diglycolamine, N-methylethanolamine, 3-butoxypropanolamine, ethylene glycolamine, propylene glycolamine, and polyamideamine.

In addition, the curable composition may contain a curing agent other than the amine compound as long as the effects of the present invention are not impaired.

[Polyfunctional Acrylate Compound]

The polyfunctional acrylate compound is a compound having a number of functional groups (that is, number of (meth)acryloyl groups) of 2 or more. In the present invention, due to the curable composition containing a polyfunctional acrylate compound, it quickly reacts with the amine compound (X), fast curability is achieved, and a certain adhesive force is imparted in the initial stage of curing.

As the polyfunctional acrylate compound, various (meth)acrylates can be used, and preferably, an ester of a polyfunctional diol and a (meth)acrylic acid is preferable.

In addition, in this specification, "(meth)acryloyl group" means either an acryloyl group or a methacryloyl group, and "(meth)acrylate" means either an acrylate or a meth acrylate, and the same applies to other similar terms.

Examples of bifunctional acrylate compounds among polyfunctional acrylate compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dimethyloltricyclodecane di(meth)acrylate, ethylene glycol di(meth)acrylate, neopentyl glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide-added bisphenol A di(meth)acrylate, propylene oxide-added bisphenol A di(meth)acrylate, ethylene oxide-added bisphenol F di(meth)acrylate, dimethylol dicyclopentadienyl di(meth)acrylate, ethylene oxide-modified isocyanuric acid di(meth)acrylate, 2-hydroxy-3-(meth)acryloyloxypropyl (meth)acrylate, carbonate diol di(meth)acrylate, polyetherdiol di(meth)acrylate, polyesterdiol di(meth)acrylate, polycaprolactone diol di(meth)acrylate, and polybutadiene diol di(meth)acrylate.

In addition, examples of tri- or higher-functional acrylate compounds among polyfunctional acrylate compounds include trimethylolpropane tri(meth)acrylate, glycerin tri(meth)acrylate, pentaerythritol tetra(meth)acrylate, alkylene oxide-added trimethylolpropane tri(meth)acrylates such as ethylene oxide-added trimethylolpropane tri(meth)acrylate, and propylene oxide-added trimethylolpropane tri(meth)acrylate, caprolactone-modified trimethylolpropane tri(meth)acrylate, ethylene oxide-added isocyanuric acid tri(meth)acrylate, propylene oxide-added glycerin tri(meth)acrylate, ditrimethylolpropane tetra(meth)acrylate, alkylene oxide-added pentaerythritol tetra(meth)acrylate, dipentaerythritol penta(meth)acrylate, dipentaerythritol hexa(meth)acrylate, tripentaerythritol octa(meth)acrylate, tetrapentaerythritol deca(meth)acrylate, tripentaerythritol hepta(meth)acrylate, and tetrapentaerythritol nona(meth)acrylate.

The number of functional groups of the polyfunctional acrylate compound is preferably 3 or more, more preferably 4 or more, and still more preferably 6 or more. When the number of functional groups of the polyfunctional acrylate compound increases, fast curability is enhanced, and the adhesive force in the initial stage of curing tends to increase. Here, the upper limit of the number of functional groups of the polyfunctional acrylate compound is not particularly limited, and may be, for example, 10 or less or 8 or less.

The molecular weight of the polyfunctional acrylate compound is preferably a certain level or less in order to enhance fast curability and reduce the viscosity before curing of the curable composition. The specific molecular weight of the polyfunctional acrylate compound may be, for example, 5,000 or less, and is preferably 3,000 or less, more preferably 1,000 or less, and still more preferably 700 or less. In addition, a polyfunctional acrylate compound having a molecular weight of, for example, 150 or more, preferably 200 or more, more preferably 250 or more, and still more preferably 450 or more, may be used. When the polyfunctional acrylate compound has a molecular weight of a certain value or more, the compressive load in the initial stage of curing is appropriately reduced, the crosslink density can be prevented from becoming higher than necessary, and it is easier to enhance elongation and adhesive force.

The polyfunctional acrylate compound is preferably a liquid at room temperature (25°C) in order to easily reduce the viscosity of the curable composition before curing.

The functional group equivalent of the polyfunctional acrylate compound is not particularly limited, and is preferably 500 g/eq or less, more preferably 300 g/eq or less, and still more preferably 150 g/eq or less, and is preferably 75 g/eq or more, more preferably 80 g/eq or more, and still more preferably 85 g/eq or more.

In the curable composition, the ratio of the number of functional groups of the polyfunctional acrylate compound to the number of functional groups of the epoxy resin may be about 0.1 or more and 2.5 or less, is preferably 0.3 or more and 1.5 or less, more preferably 0.6 or more and 1.2 or less, and still more preferably 0.75 or more and 1.1 or less. When the ratio of the number of functional groups of the polyfunctional acrylate compound is within a predetermined range, the amine compound (X) and the polyfunctional acrylate compound are cured preferentially in the initial stage, and fast curability is exhibited, but the reaction between the amine compound (X) and the epoxy resin is inhibited, and thus the compressive load remains low in the initial stage of curing, and the pot life can be extended.

The content of the polyfunctional acrylate compound with respect to the total amount of resin components is, for example, 26 mass% or less, and preferably 20 mass% or less. When the content of the polyfunctional acrylate compound is reduced, for example, to 20 mass% or less, the polyfunctional acrylate compound can prevent initial curing from excessively proceeding and makes it easier to maintain a low initial compressive load. In addition, when the content of the polyfunctional acrylate compound is reduced, moisture resistance is also enhanced. Therefore, for example, even when it is used for a long time in a high temperature and high humidity after curing, it is possible to maintain a high adhesive strength. The content of the polyfunctional acrylate compound is more preferably 18 mass% or less and still more preferably 17 mass% or less.

In addition, the content of the polyfunctional acrylate compound is preferably a certain amount or more in order to exhibit fast curability and increase the adhesive force in the initial stage of curing, and is, for example, 3 mass% or more, preferably 5 mass% or more, more preferably 10 mass% or more, and still more preferably 12 mass% or more with respect to the total amount of resin components.

Here, the curable composition may contain a compound other than the epoxy resin and the polyfunctional acrylate compound as a base resin that can be cured with a curing agent. The base resin other than the epoxy resin and the polyfunctional acrylate compound includes, for example, a monofunctional acrylate compound. The monofunctional acrylate compound is a (meth)acrylate having only one (meth)acryloyl group.

In addition, in the present embodiment, the contents of the epoxy resin, the acrylate compound, and the amine compound in the curable composition are preferably adjusted so that the equivalent ratio of the functional groups contained in each compound satisfies the following Formula (1).

$$[A/(B+C)]=1.1 \text{ or more and } 2.9 \text{ or less} \qquad (1)$$

(here, in Formula (1), A is the number of active hydrogen atoms of amino groups contained in the amine compound in the curable composition, B is the number of epoxy groups contained in the epoxy resin, and C is the number of (meth)acryloyl groups contained in the acrylate compound)

When the equivalent ratio of the functional group is 1.1 or more, the number of active hydrogen atoms of amino groups becomes appropriate, a certain reaction proceeds in initial curing, and fast curability is easily obtained. In addition, when the equivalent ratio is 2.9 or less, the number of active hydrogen atoms of amino groups does not become too large, the compressive load in the initial stage of curing is reduced, and it becomes easier to extend the pot life.

The equivalent ratio of the functional group is more preferably 1.3 or more, still more preferably 1.35 or more, and yet more preferably 1.4 or more, and more preferably 2.6 or less, still more preferably 2.1 or less, and yet more preferably 1.8 or less.

Here, as described above, the equivalent ratio can be determined by calculating the equivalent of epoxy groups, the equivalent of active hydrogen atoms of amino groups, and the equivalent of (meth)acryloyl groups.

The equivalent of epoxy groups can be obtained by dividing the content (g) of the epoxy resin contained in the curable composition by the epoxy equivalent (g/eq). However, when two or more epoxy resins are contained, the equivalent can be obtained by summing the values obtained by dividing the content (g) of each epoxy resin by the epoxy equivalent (g/eq).

The equivalent of active hydrogen atoms of amino groups can be obtained by dividing the content (g) of the amine in the curable composition by the active hydrogen equivalent (g/eq) of the amine. However, when two or more amines are contained, the equivalent can be obtained by summing the values obtained by dividing the content (g) of each amine by the active hydrogen equivalent (g/eq).

In addition, the equivalent of (meth)acryloyl groups can be obtained by dividing the content (g) of the acrylate compound contained in the curable composition by the (meth)acryloyl equivalent (g/eq). However, when two or more acrylate compounds are contained, the equivalent can be obtained by summing the values obtained by dividing the content (g) of each acrylate compound by the (meth)acryloyl equivalent (g/eq).

Here, the epoxy equivalent (g/eq) can be obtained by dividing the molecular weight of the epoxy resin by the number of epoxy groups per molecule. In addition, the active hydrogen equivalent (g/eq) can be obtained by dividing the molecular weight of the amine by the number of active hydrogen atoms per molecule. In addition, the (meth)acryloyl equivalent (g/eq) can be obtained by dividing the molecular weight of the acrylate compound by the number of (meth)acryloyl groups per molecule.

The molecular weight, the number of epoxy groups, the number of active hydrogen atoms and the number of (meth)acryloyl groups can be measured by a mass spectrometer (GC-MS or LC-MS). In addition, when only the molecular weight can be determined by a mass spectrometer, the numbers of epoxy groups and active hydrogen atoms per molecule can be determined by NMR (1H NMR, etc.). However, when the sample is a mixture, it is preferable to isolate each component by gel permeation chromatography (GPC) or high performance liquid chromatography (HPLC) and then perform measurement by NMR.

Here, when the structural formula of an epoxy resin is known, the molecular weight and the number of epoxy groups are the molecular weight and the number of epoxy groups of the epoxy resin that can be calculated from the structural formula. In addition, when the structural formula of an amine is known, the molecular weight and the number of active hydrogen atoms are the molecular weight and the number of active hydrogen atoms in the amine that can be calculated from the structural formula. The same applies to the acrylate compound.

Here, the number of active hydrogen atoms in the amine is 1 for $NHR_2$ (secondary amino group) and 2 for $NH_2R$ (primary amino group) (provided that, in $NHR_2$ and $NH_2R$, R is a functional group other than active hydrogen, that is, a moiety of the amine other than NH or $NH_2$).

The content of the resin component in the curable composition with respect to a total volume of the curable composition is preferably 8 vol% or more and 65 vol% or less. When the content is equal to or more than the lower limit value, the thermally conductive filler can be appropriately dispersed in the thermally conductive member and the curable composition. In addition, it is possible to prevent the viscosity of the curable composition from becoming higher than necessary. In addition, when the content is equal to or less than the upper limit value, it becomes easier to incorporate a certain amount or more of the thermally conductive filler into the curable composition. The content of the resin component in the curable composition is more preferably 15 vol% or more and 55 vol% or less and still more preferably 18 vol% or more and 45 vol% or less.

[Water]

The curable composition in the present embodiment may contain water. When the curable composition contains water, water functions as a catalyst to promote the reaction of the amine compound (X) with the epoxy resin and the polyfunctional acrylate compound, particularly the reaction of the amine compound (X) with the polyfunctional acrylate compound, and fast curability is easily obtained.

The content of water is preferably 0.3 mass% or more and 2.0 mass% or less based on a total amount of the curable composition. When the water content is 0.3 mass% or more, water can appropriately promote the reaction between the amine compound (X) and the polyfunctional acrylate compound. In addition, when the water content is 2.0 mass% or less, problems such as deterioration of physical properties of the cured product of the curable composition due to an excess amount of water and a shortened pot life due to excessive curing due to water are unlikely to occur.

The water content is preferably 0.5 mass% or more and 1.5 mass% or less, and more preferably 0.7 mass% or more and 1.2 mass% or less.

Here, the water content in the curable composition can be determined by measurement using a Karl Fischer method.

In addition, when the curable composition contains water, even when the content of the polyfunctional acrylate compound is a relatively small amount, the reaction between the polyfunctional acrylate compound and the epoxy resin can effectively proceed, and the curable composition can have sufficient fast curability. Therefore, even when the curable composition contains water, the content of the polyfunctional acrylate compound may be adjusted to be equal to or less than the upper limit value, but may be further reduced, for example, to 10 mass% or less.

[Thermally Conductive Filler]

The curable composition according to the present embodiment contains a thermally conductive filler. With the curable composition containing the thermally conductive filler, the thermal conductivity of the thermally conductive member formed from the curable composition is enhanced.

Examples of thermally conductive fillers include metals, metal oxides, metal nitrides, metal hydroxides, carbon materials, non-metal oxides, nitrides, and carbides. In addition, the form of the thermally conductive filler includes spherical shape, a powder having an indefinite shape, or the like.

In the thermally conductive filler, examples of metals include aluminum, copper, and nickel, examples of metal oxides include aluminum oxide such as alumina, magnesium oxide, and zinc oxide, and examples of metal nitrides include aluminum nitride. Examples of metal hydroxides include aluminum hydroxide. In addition, examples of carbon materials include spherical graphite. Examples of non-metal oxides, nitride, and carbides include quartz, boron nitride, and silicon carbide. Among these examples, aluminum oxide is preferable in order to enhance heat dissipation properties of the thermally conductive member and aluminum hydroxide is preferable when it is desired to enhance flame retardant properties.

The above thermally conductive fillers may be used alone or two or more thereof may be used in combination.

The average particle size of the thermally conductive filler is preferably 0.1 μm or more and 200 μm or less, more preferably 0.5 μm or more and 150 μm or less, and still more preferably 1 μm or more and 110 μm or less.

As the thermally conductive filler, it is preferable to use a small-particle-size thermally conductive filler having an average particle size of 0.1 μm or more and 5 μm or less and a large-particle-size thermally conductive filler having an average particle size of more than 5 μm and 200 μm or less in combination. The filling rate can be increased when the thermally conductive fillers having different average particle sizes are used.

Here, the average particle size of the thermally conductive filler can be measured by observation under an electron microscope or the like. More specifically, for example, the particle sizes of 50 random thermally conductive fillers are measured using an electron microscope or an optical microscope, and the average value (arithmetic average value) thereof can be taken as the average particle size.

The content of the thermally conductive filler in the curable composition with respect to a total volume of the curable composition is preferably 30 vol% or more and 90 vol% or less. When the content is equal to or more than the lower limit value, a certain level of thermal conductivity can be imparted to the curable composition. In addition, when the content of the thermally conductive filler is equal to or less than the upper limit value, the thermally conductive filler can be appropriately dispersed in the curable composition, and the viscosity of the curable composition can be prevented from becoming higher than necessary. Here, in the present invention, when the viscosity of the curable composition is reduced, the content of the thermally conductive filler is easily increased. The content of the thermally conductive filler in the curable composition is more preferably 40 vol% or more and 80 vol% or less, and still more preferably 50 vol% or more and 75 vol% or less.

The content of the thermally conductive filler in the curable composition with respect to 100 parts by mass of the resin component when expressed by parts by mass is preferably 150 parts by mass or more and 3,000 parts by mass or less, more preferably 200 parts by mass or more and 2,000 parts by mass or less, and still more preferably 300 parts by mass or more and 1,000 parts by mass or less.

(Other Additives)

The curable composition of the present invention may contain additives other than those described above, and examples of such additives include a dispersant, a curing catalyst that promotes the reaction between the base resin and the curing agent other than water, a reaction rate control agent (reaction retarding agent) that inhibits the reaction between the base resin and the curing agent, a thixotropy-imparting agent, a flame retardant, a plasticizer, an antioxidant, and a colorant.

As described above, the curable composition of the present invention may contain a dispersant. Examples of dispersants include a polymer-based dispersant. Examples of polymer-based dispersants include a polymer compound having a functional group. Examples of polymer compounds include acrylic-based, vinyl-based, polyester-based, polyurethane-based, polyether-based, epoxy-based, polystyrene-based, amino-based, and silicone-based compounds. In addition, examples of functional groups include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. In addition, as the dispersant, a dispersant that is not a polymer dispersant may also be used and, for example, an alkoxysilane compound may also be used.

The content of the dispersant in the curable composition with respect to 100 parts by mass of the resin component is preferably 0.01 parts by mass or more and 5 parts by mass or less, more preferably 0.05 parts by mass or more and 3 parts by mass or less, and still more preferably 0.07 parts by mass or more and 2 parts by mass or less.

<Viscosity>

The viscosity of the curable composition of the present invention is preferably 300 Pa·s or less. Here, the viscosity is a viscosity measured using a rheometer when the temperature of a sample is adjusted to 25°C with a Peltier plate and a φ25 mm parallel plate is used while continuously changing the shear rate in a shear rate range of 0.0001 to 100 (1/s), and is a value at a shear rate of 3.16 (1/s). As the rheometer, for example, a rheometer ("MCR-302e", commercially available from Anton Paar) is used.

For a two-component curing typed curable composition, the viscosity may be measured after mixing the first agent and the second agent, but in this case, since the curing rate is too fast and it is not possible to perform highly accurate evaluation, the viscosities of the first agent and the second agent may be measured before mixing and evaluated.

However, as will be described below, when the viscosities of the first agent and the second agent before mixing are measured, a sample is placed in a rheometer and then left to stand for 10 minutes, and the viscosity is then measured.

When the viscosity of the curable composition is 300 Pa·s or less, the curable composition can be easily applied to the adherend, and the workability is enhanced. In addition, narrow gaps can be easily filled with the curable composition. The viscosity is more preferably 250 Pa·s or less, and still more preferably 200 Pa·s or less. In addition, the viscosity may be, for example, 10 Pa·s or more, and in order to fill it with a certain amount or more of the thermally conductive filler and prevent dripping and the like, the viscosity is preferably 30 Pa·s or more, and more preferably 50 Pa·s or more.

<Adhesive Strength>

The curable composition of the present invention can secure a high adhesive force by increasing the adhesive strength after curing. Therefore, the higher the adhesive strength of the curable composition after curing, the better, and the adhesive strength is, for example, 1 MPa or more, preferably 1.5 MPa or more, and more preferably 2 MPa or more. The higher the adhesive strength of the curable composition after curing, the better, and practically, the adhesive strength is, for example, 25 MPa or less.

In addition, when the curable composition of the present invention has an elongation at the maximum load after curing of a certain value or more, it is possible to secure flexibility, and it is easier to enhance the reliability and the like. The curable composition of the present invention has an elongation at the maximum load after curing of, for example, 0.4 mm or more, preferably 0.5 mm or more, and more preferably 0.6 mm or more. In addition, the elongation at the maximum load is not particularly limited, but is, for example, 3 mm or less, and preferably 2 mm or less, in order to impart a certain adhesive strength.

The curable composition of the present invention preferably has an adhesive strength obtained when left in an environment of 18°C and 20% RH for 1 hour (also referred to as a "process adhesive strength") of a certain value or more. The process adhesive strength indicates the adhesive strength in the initial stage of curing, with a higher value indicating better fast curability, and when the process adhesive strength is a certain value or more, fast curability of the curable composition is enhanced. The process adhesive strength is preferably 0.05 MPa or more, more preferably 0.1 MPa or more, and still more preferably 0.25 MPa or more. The upper limit of the process adhesive strength is not particularly limited, and is, for example, 1 MPa or less, in order to easily reduce the compressive load to be described below.

Here, the adhesive strength and elongation at the maximum load of the curable composition after curing can be measured by the following test method. First, two PET plates with a size of 25 mm×100 mm and a thickness of 2 mm are prepared. Then, the ends of the two prepared plates are made to overlap each other with the curable composition therebetween, and the curable composition is then cured to bond the ends of the plates to obtain a measurement sample. Here, the ends between the plates are bonded together with a cured product of the curable composition with a size of 25 mm×5 mm and a thickness of 1 mm. The maximum load when the obtained measurement sample is pulled in the length direction by a tensile tester is taken as the adhesive force, and the elongation of the cured product at the maximum load is taken as the elongation at the maximum load. The tensile speed should be 10 mm/sec.

Here, for curing the curable composition, the curable composition may be fully cured between the PET plates. Specifically, for example, in the case of a two-component type, the first agent and the second agent may be mixed and applied, and the mixture may be disposed between the PET plates, and then left at room temperature (25°C) for 168 hours.

On the other hand, the process adhesive strength can be measured in the same method as in the measurement of the adhesive strength except that, as substrates, an aluminum plate and a glass fiber-reinforced PET substrate having a size of 25 mm×100 mm and a thickness of 2 mm are used in place of the PET plates, and the curable composition is cured by leaving it in an environment of 18°C and 20% RH for 1 hour.

<Thermal Conductivity>

The curable composition of the present invention has the thermal conductivity of the cured product thereof that is preferably 1.3 W/(m·K) or more, more preferably 1.5 W/(m·K) or more, and still more preferably 1.7 W/(m·K) or more. When the thermal conductivity of the cured product of the curable composition is equal to or more than these lower limit values, the thermal conductivity is enhanced. Therefore, for example, when used in a battery cell assembly, heat generated from the battery cell can be efficiently transferred to a module housing or a battery pack via the cured product (thermally conductive member) of the curable composition, and an excessive increase in the temperature of the battery cell can be prevented. The higher the thermal conductivity, the better, and practically, the thermal conductivity is, for example, 7.0 W/m·K or less.

The thermal conductivity can be measured by the method according to ASTM D5470-06.

Specifically, the curable composition is applied in an excessive amount so as to be larger than the thickness at the time of measurement such that the measurement die that serves as a heating element is covered, then sandwiched with the heat dissipating element, and compressed with a load of 30 psi until the thickness of the curable composition becomes 1.0 mm, 1.5 mm, and 2.0 mm, and the thermal resistances at these thicknesses are measured. The thickness can be regulated by a spacer. A graph depicting these three thermal resistance values is created, with the horizontal axis representing thickness and the vertical axis representing thermal resistance, and the least squares method is used to obtain an approximate straight line for the three points. The inclination of the approximate straight line is defined as thermal conductivity.

In the present invention, the curable composition has the compressive load when cured at 35°C for 10 minutes being preferably 1,500 N or less, more preferably 1,000 N or less, and still more preferably 800 N or less. The lower limit of the compressive load is not particularly limited, and is, for example, 100 N in order to easily obtain a certain adhesive force in temporary adhesion. When the compressive load is equal to or less than a predetermined value, the curable composition has a certain flexibility in the initial stage of curing and temporary adhesion is easily performed. In addition, since the compressive load is low, it is also easier to extend the pot life.

The compressive load is the load when the curable composition cured under the above conditions is pressed by a jig under predetermined conditions described in examples.

<Supply Form>

The form of the curable composition of the present embodiment may be a one-component type or a two-component type in which a first agent and a second agent are combined, and a two-component type is preferable in consideration of storage stability.

In the two-component typed curable composition, the mass ratio of the second agent to the first agent (second agent/first agent) is preferably 1 or a value close to 1, and specifically, preferably 0.9 or more and 1.1 or less, and more preferably 0.95 or more and 1.05 or less. In this manner, when the mass ratio of the second agent to the first agent is set to 1 or a value close to 1, it is easier to prepare the curable composition.

In addition, in the two-component typed curable composition, the first agent and the second agent are both a liquid at room temperature (25°C), and the viscosities of the first agent and the second agent are the same, or when the viscosities are different, it is preferable that the viscosity difference be small. In this manner, when the viscosities of the first agent and the second agent are the same as or close to each other, it becomes easier to uniformly mix the curable composition.

Specifically, the viscosity difference between the viscosity (Pa·s) of the first agent and the viscosity (Pa·s) of the second agent is preferably 150 Pa·s or less, more preferably 100 Pa·s or less, and still more preferably 50 Pa·s or less. In addition, the viscosity difference may be 0 Pa·s or more.

The viscosity of each of the first agent and the second agent is not particularly limited, and is preferably 10 Pa·s or more and 300 Pa·s or less, more preferably 30 Pa·s or more and 250 Pa·s or less, and still more preferably 40 Pa·s or more and 200 Pa·s or less.

In addition, the viscosities of the first agent and the second agent here can be measured using a rheometer (for example, rheometer "MCR-302e", commercially available from Anton Paar) when the temperature of a sample is adjusted to 25°C with a Peltier plate, and a φ25 mm parallel plate is used while continuously changing the shear rate in a shear rate range of 0.0001 to 100 (1/sec) after the sample is placed thereon and then left to stand for 10 minutes. In addition, the value of the viscosity is a value at a shear viscosity of 3.16 (1/sec).

More specifically, in the two-component typed curable composition, the first agent may contain a base resin that is cured with a curing agent such as an epoxy resin and a polyfunctional acrylate compound, and the second agent may contain a curing agent such as an amine compound (X).

In the two-component typed curable composition, the first agent contains a base resin (that is, an epoxy resin and a polyfunctional acrylate compound), but does not need to contain a curing agent (that is, an amine compound (X)).

On the other hand, the second agent contains a curing agent (that is, an amine compound (X)). In addition, the second agent may contain a curing catalyst as necessary. For example, when water is used as a catalyst, the second agent should contain water. In addition, the base resin (that is, the epoxy resin and the polyfunctional acrylate compound) may not be contained. However, the second agent may contain a part of the base resin (that is, the epoxy resin and the polyfunctional acrylate compound) as long as it does not react with the curing agent.

In addition, the thermally conductive filler is contained in at least one of the first agent or the second agent, but is preferably contained in both the first agent and the second agent.

Therefore, it is preferable that the first agent contain a base resin (that is, an epoxy resin and a polyfunctional acrylate compound) and a thermally conductive filler, and the second agent contain a curing agent (that is, an amine compound) and a thermally conductive filler. In addition, it is more preferable that the first agent not contain a curing agent such as an amine compound and the second agent not contain a base resin. Therefore, it is more preferable that the entire base resin of the curable composition be contained in the first agent, and the entire curing agent of the curable composition be contained in the second agent.

In addition, as described above, it is preferable that the thermally conductive filler be contained in both the first agent and the second agent, and particularly, it is more preferable that the thermally conductive filler be contained approximately equally in the first agent and the second agent. Specifically, the ratio (mass ratio) of the content of the thermally conductive filler in the second agent to the content of the thermally conductive filler in the first agent is preferably 0.67 or more and 1.5 or less, more preferably 0.83 or more and 1.2 or less, and still more preferably 0.91 or more and 1.1 or less. When the thermally conductive filler is distributed approximately equally between the first agent and the second agent, it becomes easier to reduce the difference in viscosity between the first agent and the second agent, and it also becomes easier to bring the volume ratio of the first agent and the second agent closer to 1.

In addition, the difference in viscosity between the first agent and the second agent can be adjusted by the viscosities of the epoxy resin, polyfunctional acrylate compound, and amine compound used. For example, when it is desired to reduce the viscosity of the first agent containing an epoxy resin, a low-viscosity epoxy resin can be used, or the content of the low-viscosity epoxy resin can be increased. Similarly, the viscosity of the first agent may be adjusted by the type and amount of the acrylate compound. In addition, the viscosity may be adjusted to be low by adding a dispersant or a plasticizer.

The first agent and the second agent may be more easily mixed when their densities are closer to each other, and a smaller difference between these densities is preferable. Specifically, the ratio between the density of the first agent and the density of the second agent (also referred to as a density ratio) is preferably 0.7 or more and 1.4 or less, more preferably 0.8 or more and 1.2 or less, and still more preferably 0.9 or more and 1.1 or less. In order to reduce the density ratio, the content of the thermally conductive filler in the first agent and the second agent may be adjusted to be within the above range.

In a two-component type, a dispersant and other additives may be contained in one or both of the first agent and the second agent as necessary. For example, when the thermally conductive filler is contained in both the first agent and the second agent, the dispersant may be contained in both the first agent and the second agent.

In the two-component typed curable composition, the ratio of the functional group concentration (mol/g) of the second agent to the functional group concentration (mol/g) of the first agent is preferably 1.1 or more and 2.9 or less. When the functional group concentration of the first agent and the second agent is within the above range, when the first agent and the second agent are mixed at a volume ratio of 1:1, the base resin and the curing agent react at an appropriate equivalent ratio, fast curability is achieved and it is also easier to extend the pot life. In addition, the curable composition is easily cured so that it maintains an appropriate adhesive strength and has an appropriate elastic modulus without three-dimensional crosslinks becoming too dense. The functional group concentration ratio is more preferably 1.3 or more, still more preferably 1.35 or more, and yet more preferably 1.4 or more, and more preferably 2.6 or less, still more preferably 2.1 or less, and yet more preferably 1.8 or less.

Here, the functional group concentration is the concentration of the epoxy group, (meth)acryloyl group, and active hydrogen of amino group contained in the first agent or the second agent, and in the first agent, the epoxy group and the (meth)acryloyl group are functional groups, and the total number of epoxy groups and (meth)acryloyl groups per unit amount (g) is the functional group concentration. In addition, in the second agent, the active hydrogen of amino groups is a functional group, and the number of active hydrogen atoms of amino groups per unit amount (g) is the functional group concentration.

When the curable composition is of a two-component type, separate containers are preferably filled with the first agent and the second agent, and specifically, a first container may be filled with the first agent, and a second container may be filled with the second agent. The first container and the second container may be separate bodies, or may be integrated into a single body. When the first container and the second container are integrated into a single body, they are easily supplied as a container set to a demand destination. Here, in this specification, the first container filled with the first agent and the second container filled with the second agent may be collectively referred to as a container set.

Examples of containers include, but are not limited to, a syringe, a cartridge, a pail can and a drum. For example, when a syringe is filled, it is preferable to use a dual barrel syringe. As shown in Fig. 1, a dual barrel syringe 30 has a first syringe 31 constituting a first container and a second syringe 32 constituting a second container which are parallelly integrated into a single body. Using the syringes as dispensers, a first agent 35 and a second agent 36 with which the syringes 31 and 32 are filled respectively may be discharged from the syringes and mixed.

In addition, when a cartridge is used, a container set is composed of a first cartridge constituting a first container and a second cartridge constituting a second container, and these cartridges may be integrated into one body. Here, the cartridges are generally set in syringes (for example, a first syringe and a second syringe) or the like, and the first agent delivered from the first cartridge and the second agent delivered from the second cartridge may be discharged from respective outlets of the first syringe and the second syringe using the syringes as dispensers and mixed.

The first agent and the second agent may be mixed in a mixer such as a static mixer. For example, as shown in Fig. 1, a static mixer 38 may be connected to an outlet 31A of the first syringe 31 and an outlet 32A of the second syringe 32, and the first agent 35 and the second agent 36 discharged from the outlets 31A and 32A can be mixed inside the mixer 38. A mixture (curable composition) obtained by mixing in the mixer 38 may be discharged from an outlet 39 of the mixer 38.

Each of the syringes 31 and 32 may have a structure in which the openings of barrels 33A and 34A which are filled with the first agent 35 and the second agent 36, respectively, are closed with lids 33B and 34B. In the syringe 30 shown in Fig. 1, the first agent 35 and the second agent 36 may be discharged from the outlets 31A and 32A by removing the lids 33B and 34B and pushing them out with a piston (not shown) inserted from the opening.

In addition, when a pail can is used, as shown in Fig. 2, the container set may include a first pail can 41 which constitutes a first container and which is filled with a first agent 45, and a second pail can 42 which constitutes a second container and which is filled with a second agent 46. Here, the pail cans 41 and 42 include, for example, container main bodies 43A and 44A which are filled with the first agent 45 and the second agent 46 and which have openings, and lids 43B and 44B which close the openings of the container main bodies 43A and 44B, respectively.

<Method of Preparing Curable Composition>

When the curable composition of the present invention is of a two-component type, the first agent and the second agent may be obtained by mixing respective components constituting the first agent and the second agent. Similarly, in the case of a one-component type, it may be obtained by mixing respective components constituting the curable composition. The method of mixing respective components is not particularly limited, and for example, the composition may be prepared by adding the thermally conductive filler, which is added as necessary, and additionally, additives such as a dispersant, which are added as necessary, to a base resin and a curing agent, and then stirring, kneading, or the like the mixture.

In addition, the thermally conductive filler may be surface-treated with a dispersant and then mixed with the base resin or the curing agent. When the thermally conductive filler is surface-treated in advance with a dispersant, the surface is previously modified with the dispersant. Thus, the thermally conductive filler that has been surface-modified in advance may be mixed with the base resin and the curing agent to prepare a first agent or a second agent.

The method of performing a surface treatment in advance using a dispersant is not particularly limited, and known methods may be used, for example, a wet treatment method, a dry treatment method and the like can be used. In the wet treatment method, for example, the thermally conductive filler is added and mixed in a treatment solution in which a dispersant is dispersed or dissolved in a solvent, the mixture is then dried, heated, washed, and the like and thus the dispersant may be bonded or adhered to the surface of the thermally conductive filler. In addition, the dry treatment method is a surface treatment method without using a dispersion medium, specifically, a method in which a dispersant is mixed with the thermally conductive filler, and the mixture is stirred in a mixer or the like, and then heated to bond or adhere the dispersant to the surface of the thermally conductive filler.

<<Second Embodiment>>

A curable composition according to a second embodiment of the present invention contains an epoxy resin, a thermally conductive filler, an amine compound (X) having two or more amino groups, a polyfunctional acrylate compound, and water.

In the present embodiment, the curable composition containing an epoxy resin, a thermally conductive filler, an amine compound (X), and a polyfunctional acrylate compound further contains water, and thus, initial curing proceeds immediately, fast curability is achieved, the compressive load can be maintained at an appropriately low level for a long period of time in the initial stage of curing, and the pot life can be extended.

In the second embodiment, the water content with respect to a total amount of the curable composition is 0.3 mass% or more and 2 mass% or less. In the second embodiment, when the water content is less than 0.3 mass%, it becomes difficult to maintain an appropriately low compressive load for a long period of time while accelerating initial curing, and it is difficult to extend the pot life while achieving fast curability. In addition, when the water content is more than 2.0 mass%, problems such as deterioration of physical properties of the cured product of the curable composition due to water and a shortened pot life due to excessive curing by water are likely to occur.

In the second embodiment, the water content with respect to a total amount of the curable composition is preferably 0.5 mass% or more and 1.5 mass% or less and more preferably 0.7 mass% or more and 1.2 mass% or less.

In the first embodiment, as an amine compound (X) having two or more amino groups, an amine compound (X1) having a viscosity of 20 Pa·s or less at 25°C and 10 rpm or having an oxyalkylene structure is used. However, in the second embodiment, the amine compound (X) having two or more amino groups may be an amine compound (X1), but is not necessarily the amine compound (X1), and may be an amine compound (X2) other than the amine compound (X1), or may be a combination of the amine compound (X1) and the amine compound (X2). Here, details of the amine compound (X1) and the amine compound (X2) are as described above, and thus descriptions thereof will be omitted.

In the second embodiment, the content of the amine compound (X) with respect to the total amount of resin components may be 15 mass% or more and 55 mass% or less, and is preferably 25 mass% or more and 50 mass% or less, and more preferably 30 mass% or more and 48 mass% or less, as in the first embodiment. However, in the second embodiment, the content of the amine compound (X) is the total content of the amine compound (X1) and the amine compound (X2). However, the content of the amine compound (X) may be outside the above range, and may be, for example, about 10 mass% or more and 65 mass% or less.

In the second embodiment, the configuration other than the amine compound (X) is the same as in the first embodiment, and description thereof will be omitted. That is, in the second embodiment, details of the epoxy resin, the thermally conductive filler, the polyfunctional acrylate compound, other additives, the viscosity, the adhesive strength, the process adhesive strength, the thermal conductivity, the compressive load, the supply form, and the preparation method are as described in the first embodiment, and descriptions thereof will be omitted.

[Thermally Conductive Member]

The curable composition of the present invention may be used as a thermally conductive member. The curable composition of the present invention becomes a thermally conductive member by curing. The thermally conductive member of the present invention is a cured product of the curable composition, and includes a polymer matrix and a thermally conductive filler. The polymer matrix is formed of a cured epoxy resin product obtained by curing a resin component containing an epoxy resin, a polyfunctional acrylate compound, and an amine compound (X), and the thermally conductive filler is dispersed in the polymer matrix and retained by the polymer matrix. The thermally conductive member may be used by being disposed between two members such as a heating element and a heat dissipating element. Examples of heating elements include an electronic component that generates heat such as a battery. Examples of heat dissipating elements include a housing and a cooling member such as a heat sink and a cooling plate.

[Applications]

The curable composition and the thermally conductive member of the present invention can be used for various applications, and for example, can be used for various electronic device applications, for example, battery assemblies such as lithium-ion battery (LiB) assemblies, power electronics, electronic packaging, LEDs, solar cells, and electrical grids. Among these examples, the curable composition and the thermally conductive member are preferably used in battery assemblies, and more preferably in LiB assemblies. Therefore, in one preferable embodiment of the present invention, a battery assembly including the thermally conductive member is provided. Here, battery assemblies such as LiB assemblies can be preferably used for vehicles.

In battery assembly applications, the curable composition and the thermally conductive member of the present invention are preferably used as a gap filler for a battery assembly. In addition, in one aspect, the curable composition and the thermally conductive member of the present invention are preferably used in a battery module, and more preferably used in a gap filler for a battery module. Hereinafter, an example in which the thermally conductive member of the present invention is applied to a battery module will be described.

The battery module includes a gap filler formed of a thermally conductive member, a plurality of battery cells, and a module housing that stores a plurality of battery cells, and the gap filler is disposed inside the module housing. The gap filler formed of the thermally conductive member is provided between the battery cells and between the battery cell and the module housing, and the gap filler provided is in close contact with the battery cell and the module housing. Thereby, the gap filler between the battery cells has a function of maintaining the separated state between the battery cells. In addition, the gap filler between the battery cell and the module housing is in close contact with both the battery cell and the module housing, and has a function of transferring heat generated in the battery cell to the module housing.

Fig. 3 shows a specific configuration of the battery module. Fig. 4 shows a specific configuration of each battery cell. As shown in Fig. 3, a plurality of battery cells 11 are disposed inside a battery module 10. Each battery cell 11 is laminated with a flexible exterior film and enclosed therein, and its overall shape is a flat shape whose thickness is small compared to its height and width size. As shown in Fig. 4, in such a battery cell 11, a positive electrode 11a and a negative electrode 11b are exposed to the outside, and a center part 11c of the flat surface is formed thicker than a crimped end 11d.

As shown in Fig. 3, the battery cells 11 are disposed so that their flat surfaces face each other. In the configuration of Fig. 3, a gap filler 13 is provided not to cover the entirety of the plurality of battery cells 11 stored inside a module housing 12. The gap filler 13 is provided so as to fill the gap present in a portion (bottom part) inside the module housing 12. The gap filler 13 is provided between the battery cells 11 and between the battery cell 11 and the module housing 12, and is in close contact with the surface of the battery cell 11 and the inner surface of the module housing 12 in this portion.

The gap filler 13 provided between the battery cells 11 adheres to the surfaces of both of the battery cells 11, but since the gap filler 13 itself has appropriate elasticity and flexibility, even when an external force that displaces the gap between the battery cells 11 is applied, it is possible to reduce strain deformation caused by the external force. Therefore, the gap filler 13 has a function of maintaining the separated state between the battery cells 11.

The gap filler 13 provided in the gap between the battery cell 11 and the inner surface of the module housing 12 is also tightly adhered to the surface of the battery cell 11 and the inner surface of the module housing 12. As a result, heat generated inside the battery cell 11 is transferred via the gap filler 13 adhered to the surface of the battery cell 11 to the inner surface of the module housing 12 which is in close contact with the other surface of the gap filler 13.

The gap filler 13 may be formed in the battery module 10 by applying a liquid curable composition using a general dispenser and then curing the liquid curable composition. In addition, as described above, with the curable composition of the present invention having a low viscosity, the workability when the gap filler 13 is formed is enhanced.

As described above, when the gap filler 13 is formed, it is preferable to use a two-component typed curable composition. The two-component type is easy to store, and it is unlikely to be cured during an application operation using a dispenser with mixing immediately before use, but it can be cured quickly after application. In addition, application using a dispenser is also preferable because the liquid curable composition can reach relatively deep inside the housing 12 of the battery module 10.

The gap filler 13 covering the battery cell 11 preferably covers 20 to 40% of each battery cell 11 on one side of the battery cell 11. By covering 20% or more, the battery cell 11 can be stably retained. In addition, when the battery cell that generates a large amount of heat is sufficiently covered, heat dissipation efficiency is enhanced. On the other hand, by covering 40% or less, heat generated from the battery cell 11 can be efficiently dissipated, and weight increase, workability deterioration and the like are prevented. In addition, in order to enhance heat dissipation efficiency, it is preferable to cover the side of the battery cell 11 on which the electrodes 11a and 11b are provided with the gap filler 13, and it is more preferable to cover the entire electrodes 11a and 11b with the gap filler 13. As described above, the battery module 10 can dissipate heat generated from the battery cell 11 to the module housing 12 via the gap filler 13.

The gap filler 13 is also preferably used in a battery pack including a plurality of battery modules 10 therein. The battery pack generally includes a plurality of battery modules 10, and a battery pack housing in which the plurality of battery modules 10 are accommodated. In the battery pack, the gap filler 13 may be provided between the battery module 10 and the battery pack housing. Thereby, heat dissipated to the module housing 12 as described above can additionally dissipate to the battery pack housing, and heat can be effectively dissipated.

In addition, in the above description, the battery assembly has been exemplified as a battery module or a battery pack including a battery module, but the battery assembly may be applied as a battery assembly having no battery module, and for example, the battery assembly is preferably applied as a battery assembly having a cell-to-pack structure.

Fig. 5 shows a schematic view of a battery assembly having a cell-to-pack structure. A battery assembly 20 having a cell-to-pack structure includes a plurality of battery cells 21 and a battery pack housing, and the plurality of battery cells 21 are adhered to a base member 25 constituting the battery pack housing via a gap filler 23 formed of a thermally conductive member (cured product of the curable composition). The base member 25 may constitute a cooling plate or the like. Here, the formation of the gap filler 23 in the battery assembly 20 may be performed in the same manner as the formation of the gap filler 13 in the battery module, for example, using a general dispenser. Since the curable composition of the present invention has a low viscosity, the workability when the gap filler 23 is formed is enhanced. In addition, the curable composition of the present invention has fast curability, but the compressive load can be reduced in the initial stage of curing, and the pot life can be extended. Therefore, in the battery assembly having a cell-to-pack structure, the battery cell 21 can be adhered to the base member 25 with high workability.

Examples

Hereinafter, the present invention will be described in more detail with reference to examples, but the present invention is not limited to these examples.

[Viscosity of Components]

The viscosities of an epoxy resin, an amine compound and an acrylate compound were measured using an E-type viscometer under conditions at 10 rpm and 25°C. As the E-type viscometer, a "TV-22 model" (commercially available from Toki Sangyo Co., Ltd.) was used.

[Adhesion Test]

The adhesive strength of the cured product of the curable composition at 25°C was measured by the following method. First, as substrates, two PET plates with a width of 25 mm, a length of 100 mm and a thickness of 2 mm (product name "PET-6010", commercially available from C.I. TAKIRON Corporation) were prepared. Then, the curable composition was applied to the longitudinal end of one of the substrates across the entire width of the plate by a length of 5 mm so that the thickness after curing was 1 mm. Then, the longitudinal end of the other substrate was placed above the applied curable composition, the sample was left in this state in an environment of 25°C and 50% RH for 168 hours, and the curable composition was cured to obtain a measurement sample. The measurement sample was formed by overlapping two PET plates across the entire width by a length of 5 mm, and bonding the PET plates together at the overlapping part with a cured product (size: 25 mm×5 mm, a thickness of 1 mm) of the curable composition therebetween, and had a size of 25 mm in width and 195 mm in length. The obtained measurement sample was subjected to a tensile test in which the measurement sample was pulled in the longitudinal direction at a tensile speed of 10 mm/sec in an environment of 25°C and 50% RH until it broke, and the maximum load was defined as the adhesive strength.

A: 1.5 MPa or more
B: 1.00 MPa or more and less than 1.5 MPa
C: less than 1.00 MPa

[Thermal Conductivity]

The thermal conductivities of the first agent and the second agent of the curable composition were determined by a method involving measuring thermal resistance using a measuring device in accordance with ASTM D 5470-06.

Specifically, the curable composition was applied in an excessive amount so as to be larger than the thickness at the time of measurement such that the measurement die that served as a heating element was covered, then sandwiched with the heat dissipating element, and compressed with a load of 30 psi until the thickness of the curable composition became 1.0 mm, 1.5 mm, and 2.0 mm, and the thermal resistances at these thicknesses were measured. The thickness can be regulated by a spacer. A graph depicting these three thermal resistance values was created, with the horizontal axis representing thickness and the vertical axis representing thermal resistance, and the least squares method was used to obtain an approximate straight line for the three points. The inclination of the approximate straight line was defined as thermal conductivity.

The measurement of thermal resistance was performed at 80°C using LW-9389 manufactured by Long Win Science and Technology Corporation. The area of the measurement die was 1 inch × 1 inch.

[Viscosity]

The first agent and second agent samples were measured using a rheometer (for example, rheometer "MCR-302e", commercially available from Anton Paar) by adjusting the temperature of the sample to 25°C with a Peltier plate, using a $\varphi$25 mm parallel plate, placing the sample thereon, and then immediately continuously changing the shear rate in a shear rate range of 0.0001 to 100(1/s). The value of the viscosity was a measurement value of the viscosity at a shear rate of 3.16 (1/s). Here, the viscosity of each sample was measured after the sample was placed and left to stand for 10 minutes, and evaluated according to the following evaluation criteria.

A: 50 Pa·s or less
B: more than 50 Pa·s and less than 300 Pa·s
C: 300 Pa·s or more

[Process Adhesive Strength]

A measurement sample was obtained in the same manner as in the adhesion test except that, as substrates, an aluminum plate and a glass fiber-reinforced PET substrate having a size of 25 mm×100 mm and a thickness of 2 mm were prepared in place of two PET plates, these substrates were made to overlap each other with the curable composition therebetween, and left in this state in an environment of 18°C and 20% RH for 1 hour, and thus the curable composition was initially cured to obtain a measurement sample. In the same manner as in the adhesion test, the obtained measurement sample was subjected to a tensile test in which the measurement sample was pulled in the longitudinal direction until it broke, and the maximum load was defined as the process adhesive strength. The process adhesive strength was evaluated according to the following evaluation criteria.

A: 0.25 MPa or more
B: 0.1 MPa or more and less than 0.25 MPa
C: 0.05 MPa or more and less than 0.1 MPa
D: less than 0.05 MPa

[Compressive Load]

2 g of the curable composition prepared according to the formulation was placed on an aluminum foil with a size of 50 mm×50 mm and a thickness of 12 $\mu$m, wrapped in the aluminum foil, and put into a thermostatic chamber at 35°C for 10 minutes to obtain a measurement sample. Then, without placing a sample, a jig was pressed against a measurement point so that the load value was 3.6 kg, and a point 10 mm away from the point was set as the measurement start position (zero point). The compressive load of the measurement sample was measured under the following conditions. The first agent and the second agent were measured in the same manner.

Test speed: 60 mm/sec
Jig size: 3 cm$\varphi$
Result read value: the result at a displacement of 9.62 mm was taken as the compressive load value.
Test environment: 25°C, 50% RH
The obtained compressive load value was used to perform evaluation according to the following four levels. Here, the compressive load indicates the compressive load in the initial stage of curing, and the lower the value, the easier the temporary adhesion, and the longer the pot life.

(Evaluation criteria)

AA: 500 N or less

A: 800 N or less

B: more than 800 N and 1,000 N or less

C: more than 1,000 N and 1,500 N or less

D: more than 1,500 N

[Examples 1 to 8 and Comparative Examples 1 to 3]

According to the formulations in Table 2, respective components were mixed to prepare first agents and second agents. The prepared first and second agents were mixed at the mass ratio (A:B) shown in Table 2 at room temperature to obtain curable compositions. The obtained curable compositions were subjected to physical property measurement and an evaluation test.
The resin components used in the examples and comparative examples are as shown in the following Table 1.

[Table 1]

| Compound name | Product name | Manufacturer name | Molecular weight | Viscosity (Pa·s) | Equivalent or active hydrogen equivalent (g/eq) | Number of functional groups | Detail |
|---|---|---|---|---|---|---|---|
| Bisphenol F type epoxy resin | jER806 | Mitsubishi Chemical Corporation | 330 | 2.0 | 165 | 2 | |
| Trimethylolpropane polyglycidyl ether | EX321 | Nagase ChemteX Corporation | 280 | 0.1 | 140 | 2 | |
| Phenyl glycidyl ether | Epogosey ML | Yokkaichi Chemical Company Limited | 150 | 0.008 | 220 | 1 | |
| Trimethylolpropane triacrylate | TMPTA | Daicel-Allnex Ltd. | 296 | 0.1 | 95 | 3 | |
| Dipentaerythritol hexaacrylate | DPHA | Daicel-Allnex Ltd. | 579 | 6.9 | 86 | 6 | |
| Trimethylolpropane poly(oxypropylene) triamine | T403 | Huntsman Corporation | 440 | 0.7 | 81 | 3 | (-NH2)×3 |
| Poly(oxypropylene) diamine | D-230 | Huntsman Corporation | 230 | 0.1 | 58 | 2 | (-NH2)×2 |
| Poly(oxypropylene) diamine | D-400 | Huntsman Corporation | 430 | 0.3 | 105 | 2 | (-NH2)×2 |

(continued)

| Compound name | Product name | Manufacturer name | Molecular weight | Viscosity (Pa·s) | Equivalent or active hydrogen equivalent (g/eq) | Number of functional groups | Detail |
|---|---|---|---|---|---|---|---|
| Reaction product of m-xylylenediamine and styrene at ratio of 1:1 | GASKAMINE 328 | Mitsubishi Gas Chemical Company, Inc. | 330 | 11.3 | 55 | 2 | (-NH2) and (-NH-) |
| Amidoamine | TD960 | DIC | - | 75 | 77 | - | (-NH,-NH2) |
| m-xylylenediamine (MXDA) | MXDA | Mitsubishi Gas Chemical Company, Inc. | 136 | 0.01 | 34 | 2 | (-NH2)×2 |

In addition, components other than the resin component are as follows.

(Dispersant)

Polymer-based dispersant (acidic group-containing copolymer)

(Thermally Conductive Filler)

Aluminum hydroxide 1: an average particle size of 1 μm

Aluminum hydroxide 2: an average particle size of 10 μm

Aluminum hydroxide 3: an average particle size of 50 μm

Aluminum hydroxide 4: an average particle size of 105 μm

[Table 2]

| | | | | Example 1 | | Example 2 | | Example 3 | | Example 4 | | Example 5 | | Example 6 | |
|---|---|---|---|---|---|---|---|---|---|---|---|---|---|---|---|
| | | | | 1st agent | 2nd agent | 1st agent | 2nd agent | 1st agent | 2nd agent | 1st agent | 2nd agent | 1st agent | 2nd agent | 1st agent | 2nd agent |
| Formulation (parts by mass) | Epoxy resin | Bisphenol F type epoxy resin | | 5.8 | | 8.1 | | 9.3 | | 4.3 | | 4.3 | | 5.8 | |
| | | Trimethylolpropane polyglycidyl ether | | | | | | | | | | | | | |
| | | Phenyl glycidyl ether | | 5.8 | | 3.5 | | 2.3 | | 5.8 | | 5.8 | | 5.8 | |
| | Acrylate | Trimethylolpropane triacrylate | | | | | | | | | | | | | |
| | | Dipentaerythritol hexaacrylate | | 5 | | 5 | | 5 | | 6.5 | | 6.5 | | 5 | |
| | Amine | Trimethylolpropane poly(oxypropylene)triamine | | | 14.4 | | 14.4 | | 14.4 | | | | | | |
| | | Poly(oxypropylene)diamine (D-230) | | | | | | | | | 14.4 | | | | |
| | | Poly(oxypropylene)diamine (D-400) | | | | | | | | | | | 14.4 | | |
| | | Reaction product of m-xylylenediamine and styrene at ratio of 1:1 | | | | | | | | | | | | | 14.4 |
| | | Amidoamine | | | | | | | | | | | | | |
| | Dispersant | Polymer-based dispersant | | 0.1 | 0.1 | 0.1 | 0.1 | 0.1 | 0.1 | 0.1 | 0.1 | 0.1 | 0.1 | 0.1 | 0.1 |
| | Thermally conductive filler | Aluminum hydroxide 1 | | 13.1 | 13.3 | 13.1 | 13.3 | 13.1 | 13.3 | 13.1 | 13.3 | 13.1 | 13.3 | 13.1 | 13.3 |
| | | Aluminum hydroxide 2 | | 17.5 | 17.8 | 17.5 | 17.8 | 17.5 | 17.8 | 17.5 | 17.8 | 17.5 | 17.8 | 17.5 | 17.8 |
| | | Aluminum hydroxide 3 | | 17.5 | 17.8 | 17.5 | 17.8 | 17.5 | 17.8 | 17.5 | 17.8 | 17.5 | 17.8 | 17.5 | 17.8 |
| | | Aluminum hydroxide 4 | | 35.1 | 35.6 | 35.1 | 35.6 | 35.1 | 35.6 | 35.1 | 35.6 | 35.1 | 35.6 | 35.1 | 35.6 |
| | Catalyst | Pure water | | | 1.0 | | 1.0 | | 1.0 | | 1.0 | | 1.0 | | 1.0 |
| Physical property value | Content of functional groups | | mmol/g | 1.20 | 1.77 | 1.23 | 1.77 | 1.25 | 1.77 | 1.28 | 2.48 | 1.28 | 1.37 | 1.20 | 2.61 |
| | Mixing ratio (mass ratio) | | | 1 : 1 | | 1 : 1 | | 1 : 1 | | 1 : 2 | | 1 : 2 | | 1 : 1 | |
| | Content of acrylate | | mass% | 16.1% | | 16.1% | | 16.1% | | 14.3% | | 14.3% | | 16.1% | |
| | Content of amine | | mass% | 46.4% | | 46.4% | | 46.4% | | 63.4% | | 63.4% | | 46.4% | |
| | Filling rate of thermally conductive filler | | vol% | 70.5% | | 70.5% | | 70.5% | | 70.5% | | 70.5% | | 70.5% | |
| | Number of acrylic functional groups/number of epoxy functional groups | | | 0.95 | | 0.89 | | 0.87 | | 1.44 | | 1.44 | | 0.95 | |
| | Equivalent ratio when first agent and second agent were mixed at mass ratio of 1:1 | | | 1.48 | | 1.44 | | 1.42 | | 1.94 | | 1.07 | | 2.18 | |
| | Adhesion test | Evaluation | | A | | B | | A | | A | | A | | A | |
| | Thermal conductivity | | W/m·K | 1.7 | | 2.7 | | 3.7 | | 2.7 | | 2.7 | | 1.7 | |
| | Viscosity | 3.16/sec | Pa·s | 150 | 190 | 220 | 190 | 290 | 196 | 150 | 50 | 150 | 50 | 145 | 1000 |
| | | Individual evaluation | | B | B | B | B | B | B | B | A | B | A | B | C |
| Evaluation | Compressive load | Single agent | N | 178 | 196 | 334 | 196 | 486 | 196 | 186 | 46 | 186 | 62 | 178 | 1000 |
| | | 35°C 10min | N | 398 | | 510 | | 638 | | 950 | | 608 | | 708 | |
| | | Overall evaluation | | AA | | A | | A | | B | | A | | A | |
| | Process adhesion | Adhesive force@18°C1h | MPa | 0.23 | | 0.28 | | 0.35 | | 0.1 | | 0.12 | | 0.1 | |
| | | Overall evaluation | | B | | A | | A | | B | | B | | B | |

[Table 2-continued]

| | | | | Example 7 | | Example 8 | | Comparative Example1 | | Comparative Example2 | | Comparative Example3 | |
|---|---|---|---|---|---|---|---|---|---|---|---|---|---|
| | | | | 1st agent | 2nd agent | 1st agent | 2nd agent | 1st agent | 2nd agent | 1st agent | 2nd agent | 1st agent | 2nd agent |
| Formulation (parts by mass) | Epoxy resin | | Bisphenol F type epoxy resin | 2.8 | | | | 5.8 | | 5.8 | | 5.8 | |
| | | | Trimethylolpropane polyglycidyl ether | | | 5.8 | | | | | | | |
| | | | Phenyl glycidyl ether | 5.8 | | 5.8 | | 5.8 | | 5.8 | | 5.8 | |
| | Acrylate | | Trimethylolpropane triacrylate | 8 | | | | | | | | | |
| | | | Dipentaerythritol hexaacrylate | | | 5 | | 5 | | 5 | | 5 | |
| | Amine | | Trimethylolpropane poly(oxypropylene)triamine | | 14.4 | | 14.4 | | | | 14.5 | | 14.5 |
| | | | Poly(oxypropylene)diamine (D-230) | | | | | | | | | | |
| | | | Poly(oxypropylene)diamine (D-400) | | | | | | | | | | |
| | | | Reaction product of m-xylylenediamine and styrene at ratio of 1:1 | | | | | | | | | | |
| | | | Amidoamine | | | | | | 14.5 | | | | |
| | Dispersant | | Polymer-based dispersant | 0.1 | 0.1 | 0.1 | 0.1 | 0.1 | 0.1 | 0.1 | 0.1 | 0.1 | 0.1 |
| | Thermally conductive filler | | Aluminum hydroxide 1 | 13.1 | 13.3 | 13.1 | 13.3 | 13.1 | 13.4 | 13.1 | 13.4 | 13.1 | 13.4 |
| | | | Aluminum hydroxide 2 | 17.5 | 17.8 | 17.5 | 17.8 | 17.5 | 18.0 | 17.5 | 18.0 | 17.5 | 18.0 |
| | | | Aluminum hydroxide 3 | 17.5 | 17.8 | 17.5 | 17.8 | 17.5 | 18.0 | 17.5 | 18.0 | 17.5 | 18.0 |
| | | | Aluminum hydroxide 4 | 35.1 | 35.6 | 35.1 | 35.6 | 35.1 | 36.0 | 35.1 | 36.0 | 35.1 | 36.0 |
| | Catalyst | | Pure water | | 1.0 | | 1.0 | | | | | | |
| Physical property value | Content of functional groups | | mmol/g | 1.28 | 1.77 | 0.85 | 1.77 | 1.20 | 1.89 | 1.20 | 1.79 | 1.20 | 1.79 |
| | Mixing ratio (mass ratio) | | | 1:1 | | 1:1 | | 1:1 | | 8.5:1.5 | | 2:3 | |
| | Content of acrylate | | mass% | 25.8% | | 16.1% | | 16.1% | | 26.1% | | 13.0% | |
| | Content of amine | | mass% | 46.4% | | 46.4% | | 46.7% | | 13.4% | | 56.7% | |
| | Filling rate of thermally conductive filler | | vol% | 70.5% | | 70.5% | | 70.5% | | 70.5% | | 70.5% | |
| | Number of acrylic functional groups/number of epoxy functional groups | | | 1.94 | | 0.86 | | 0.95 | | 0.95 | | 0.95 | |
| | Equivalent ratio when first agent and second agent were mixed at mass ratio of 1:1 | | | 1.39 | | 2.10 | | 1.58 | | 1.50 | | 1.50 | |
| | Adhesion test | Evaluation | | A | | A | | A | | C | | C | |
| | Thermal conductivity | | W/m·K | 1.7 | | 1.7 | | 1.7 | | 1.7 | | 1.7 | |
| | Viscosity | 3.16/sec | Pa·s | 125 | 190 | 150 | 190 | 145 | 2500 | 145 | 190 | 145 | 190 |
| | | Individual evaluation | | B | B | B | B | B | C | B | B | B | B |
| Evaluation | Compressive load | Single agent | N | 138 | 196 | 137 | 196 | 178 | 2286 | 178 | 196 | 178 | 196 |
| | | 35°C 10min | N | 948 | | 740 | | 3720 | | 448 | | 4000 | |
| | | Overall evaluation | | B | | A | | D | | AA | | D | |
| | Process adhesion | Adhesive force@18°C1h | MPa | 0.35 | | 0.3 | | 0.58 | | 0 | | 0 | |
| | | Overall evaluation | | A | | A | | A | | D | | D | |

*The content of functional groups, in the first agent, is the sum of the number of epoxy groups contained in the epoxy resin and the number of (meth)acryloyl groups contained in the acrylate compound per unit amount (g), and in the second agent, is the number of active hydrogen atoms of amino groups contained in the amine.

*The equivalent ratio is the ratio of the number of active hydrogen atoms of amino groups contained in the amine to the total number of epoxy groups and (meth)acryloyl groups contained in the epoxy resin and the acrylate compound in the curable composition obtained by mixing the first agent and the second agent at a mass ratio of 1:1.

*In Table 2, in the formations of the first and second agents, the total amount is stated to be 100 parts by mass.

[0116] In the above examples, in the curable composition containing an epoxy resin, a thermally conductive filler, an amine compound, and a polyfunctional acrylate compound, a predetermined amount of a specific amine compound was used, or a predetermined amount of water was contained. Therefore, after a short time had elapsed after application, the curable composition had a certain level or more of adhesive strength (process adhesive strength), favorable fast curability was exhibited, but the compressive load was reduced, and the pot life could be extended. In addition, in the curable composition of each example, the viscosity before curing could also be reduced.

In the above examples, in the curable composition containing an epoxy resin, a thermally conductive filler, an amine compound, and a polyfunctional acrylate compound, a predetermined amount of a specific amine compound was used, or a predetermined amount of water was contained. Therefore, after a short time had elapsed after application, the curable composition had a certain level or more of adhesive strength (process adhesive strength), favorable fast curability was exhibited, but the compressive load was reduced, and the pot life could be extended. In addition, in the curable composition of each example, the viscosity before curing could also be reduced.

On the other hand, the curable composition of each comparative example contained an epoxy resin, a thermally conductive filler, an amine compound, and a polyfunctional acrylate compound, but a specific amine compound was not used, and a specific amount of a specific amine compound was not contained, and thus the compressive load was high and the pot life could not be extended.

Reference Signs List

| 10 | Battery module |
| 11, 21 | Battery cell |
| 12 | Battery module housing (module housing) |
| 13, 23 | Gap filler |
| 20 | Battery assembly |
| 25 | Base member |

Claims

1. A curable composition comprising an epoxy resin, a thermally conductive filler, an amine compound (X) having two or more amino groups, and a polyfunctional acrylate compound,

   the amine compound (X) having a viscosity of 20 Pa·s or less measured at 25°C and 10 rpm using an E-type viscometer or having an oxyalkylene structure,
a content of the amine compound (X) with respect to a total amount of resin components being 15 mass% or more and 55 mass% or less.

2. The curable composition according to claim 1, wherein a content of the polyfunctional acrylate compound with respect to the total amount of resin components is 20 mass% or less.

3. The curable composition according to claim 1, wherein the number of functional groups of the polyfunctional acrylate compound is 3 or more.

4. The curable composition according to claim 1, wherein the number of functional groups of the polyfunctional acrylate compound is 6 or more.

5. The curable composition according to claim 1, having a viscosity measured at 25°C using a rheometer of 300 Pa·s or less.

6. The curable composition according to claim 1, wherein the epoxy resin comprises a monofunctional epoxy resin.

7. The curable composition according to claim 1, wherein the amine compound (X) has an oxypropylene structure.

8. The curable composition according to claim 1, comprising 0.3 mass% or more and 2 mass% or less of water with respect to a total amount of the curable composition.

9. The curable composition according to claim 1, wherein the amine compound (X) comprises an amine compound having three or more amino groups.

10. The curable composition according to claim 1, comprising a first agent which comprises the epoxy resin and the polyfunctional acrylate compound and with which a first container is filled, and a second agent which comprises the amine compound (X) and with which a second container is filled.

11. The curable composition according to claim 10, wherein a difference between a viscosity (Pa·s) of the first agent and a viscosity (Pa·s) of the second agent measured at 25°C using a rheometer is 150 Pa·s or less.

12. The curable composition according to claim 10, wherein a ratio of a functional group concentration (mol/g) of the second agent to a functional group concentration (mol/g) of the first agent is 1.3 or more and 2.6 or less.

13. A curable composition comprising an epoxy resin, a thermally conductive filler, an amine compound (X) having two or more amino groups, a polyfunctional acrylate compound, and water,
a content of the water with respect to a total amount of the curable composition being 0.3 mass% or more and 2.0 mass% or less.

14. A container set, which is filled with the curable composition according to claim 10, comprising the first container filled with the first agent and the second container filled with the second agent.

15. A curable composition comprising an epoxy resin, a thermally conductive filler, an amine compound (X) having two or more amino groups, and a polyfunctional acrylate compound,

the amine compound (X) having a viscosity of 20 Pa·s or less measured at 25°C and 10 rpm using an E-type viscometer or having an oxyalkylene structure,
a content of the amine compound (X) with respect to a total amount of resin components being 15 mass% or more and 70 mass% or less,
the amine compound (X) comprising an amine compound having two amino groups.

16. A thermally conductive member formed of a cured product of the curable composition according to any one of claims 1 to 13 and claim 15.

17. A battery assembly comprising the thermally conductive member according to claim 16.

Fig. 1

Fig. 2

## Fig. 3

Fig. 4

# Fig. 5

## INTERNATIONAL SEARCH REPORT

| International application No. |
| --- |
| **PCT/JP2024/003193** |

| A. | CLASSIFICATION OF SUBJECT MATTER |
| --- | --- |

*C08L 63/00*(2006.01)i; *C08G 59/50*(2006.01)i; *C08G 73/02*(2006.01)i; *C08K 3/013*(2018.01)i; *C08K 5/17*(2006.01)i; *C08K 5/103*(2006.01)i; *C09K 5/14*(2006.01)i; *H01M 10/653*(2014.01)i
FI: C08L63/00 C; C08K5/17; C08K3/013; C08K5/103; C08G59/50; C09K5/14 E; H01M10/653; C08G73/02

According to International Patent Classification (IPC) or to both national classification and IPC

| B. | FIELDS SEARCHED |
| --- | --- |

Minimum documentation searched (classification system followed by classification symbols)

C08L63/00-63/10; C08G59/00-59/72; C08G73/00-73/26; C08K3/00-13/08; C09K5/00-5/20; H01M10/52-10/667

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2001-261722 A (JSR CORP.) 26 September 2001 (2001-09-26) claims, paragraphs [0017]-[0026], [0034], [0047]-[0049], [0052] | 1-17 |
| X | JP 2002-179769 A (HITACHI CHEMICAL CO., LTD.) 26 June 2002 (2002-06-26) claims, paragraphs [0006]-[0027], [0035], examples ([table 1]) | 1-6, 10-12, 14-16 |
| A | | 7-9, 13, 17 |
| A | JP 2015-21118 A (3M INNOVATIVE PROPERTIES COMPANY) 02 February 2015 (2015-02-02) claims, paragraph [0002] | 1-17 |
| A | JP 2015-135805 A (HITACHI CHEMICAL COMPANY, LTD.) 27 July 2015 (2015-07-27) claims | 1-17 |
| A | JP 2011-195673 A (SEKISUI CHEMICAL CO., LTD.) 06 October 2011 (2011-10-06) claims | 1-17 |

☑ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
| --- |
| **PCT/JP2024/003193** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2018/079533 A1 (SUMITOMO BAKELITE CO., LTD.) 03 May 2018 (2018-05-03) claims | 1-17 |

Form PCT/ISA/210 (second sheet) (July 2022)

## INTERNATIONAL SEARCH REPORT
### Information on patent family members

International application No.

**PCT/JP2024/003193**

| Patent document cited in search report | | | Publication date (day/month/year) | Patent family member(s) | | | Publication date (day/month/year) |
|---|---|---|---|---|---|---|---|
| JP | 2001-261722 | A | 26 September 2001 | (Family: none) | | | |
| JP | 2002-179769 | A | 26 June 2002 | (Family: none) | | | |
| JP | 2015-21118 | A | 02 February 2015 | (Family: none) | | | |
| JP | 2015-135805 | A | 27 July 2015 | WO | 2015/093136 | A1 | |
| | | | | CN | 105814093 | A | |
| JP | 2011-195673 | A | 06 October 2011 | (Family: none) | | | |
| WO | 2018/079533 | A1 | 03 May 2018 | US | 2019/0338171 | A1 | |
| | | | | claims | | | |
| | | | | KR | 10-2019-0057400 | A | |
| | | | | CN | 109890903 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021512990 A